# EUROPEAN PATENT APPLICATION

(11) **EP 4 561 125 A1**
(43) Date of publication of application: **28.05.2025**
(21) Application number: 23851591.0
(22) Date of filing: 25.07.2023
(51) Int. Cl.: H04W 8/14

(54) **COMMUNICATION METHOD AND APPARATUS, COMMUNICATION DEVICE AND COMPUTER STORAGE MEDIUM**

(30) Priority: 08.08.2022 CN 202210946329
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100053 (CN); SHI, Yuanyuan, Beijing 100053 (CN); WEI, Bin, Beijing 100053 (CN)
(74) Representative: Novagraaf Technologies
(86) International application number: PCT/CN2023/109155
(87) International publication number: WO 2024/032369

(57) **Abstract**

Disclosed in the embodiments of the present disclosure are a communication method and apparatus, and a communication device and a computer storage medium. The method comprises: an application function (AF) or a network function (NF) receiving first information from a network data analytics function, wherein the first information comprises first packet flow description (PFD) analysis information and/or first PFD information corresponding to a first application identifier; and sending second information to a first network element, wherein the second information is used for requesting the processing of the PFD information corresponding to the first application identifier, and the processing comprises at least one of creation, updating and deletion.

## Description

### CROSS-REFERENCE TO RELATED APPLICATION

This application is based on and claims priority to Chinese patent No. 202210946329.1 filed on August 08, 2022, the contents of which are hereby incorporated by reference in by its entirety.

### TECHNICAL FIELD

The disclosure relates to the technical field of communications, and in particular to a method and apparatus for communication, a communication device, and a computer storage medium.

### BACKGROUND

At present, an application function (AF) may output packet flow description (PFD) information to a network exposure function (NEF), and a network data analytics function (NWDAF) may also obtain PFD information and output the same to the NEF. There is no effective solution at present to the problem that the PFD information output by the NWDAF to the NEF is duplicated with the PFD information sent by the AF to the NEF.

### SUMMARY

Embodiments of the disclosure provide a method and apparatus for communication, a communication device and a computer storage medium.

The technical solutions of the disclosure are implemented as following:

In a first aspect, embodiments of the disclosure provide a method for communication, including: receiving, by an application function (AF) or a network function (NF), first information from a network data analytics function, wherein the first information includes first packet flow description (PFD) analysis information corresponding to a first application identifier and/or first PFD information corresponding to the first application identifier; and sending, by the AF or the NF, second information to a first network element, wherein the second information is configured to request processing PFD information corresponding to the first application identifier, and the processing includes at least one of creation, update and deletion.

In some optional embodiments of the disclosure, the second information includes the PFD information to be processed and/or the first application identifier.

In some optional embodiments of the disclosure, receiving, by the AF or the NF, the first information from the network data analytics function includes: receiving, by the AF or the NF, the first information from the network data analytics function through the first network element; or receiving, by the AF or the NF, the first information from the network data analytics function directly.

In some optional embodiments of the disclosure, the method further includes: sending, by the AF or the NF, third information to the network data analytics function, wherein the third information is configured to subscribe PFD analysis information and/or PFD information, and the third information includes the first application identifier.

In some optional embodiments of the disclosure, sending, by the AF or the NF, the third information to the network data analytics function includes: sending, by the AF or the NF, the third information to the network data analytics function through the first network element; or sending, by the AF or the NF, the third information to the network data analytics function directly.

In some optional embodiments of the disclosure, the first PFD analysis information includes the first PFD information.

In some optional embodiments of the disclosure, the first network element includes: a network exposure function and/or a packet flow description function.

In a second aspect, embodiments of the disclosure further provide a method for communication, including: sending, by a network data analytics function, first information to an application function (AF) or a network function (NF), wherein the first information includes first packet flow description (PFD) analysis information corresponding to a first application identifier and/or first PFD information corresponding to the first application identifier.

In some optional embodiments of the disclosure, sending, by the network data analytics function, the first information to the AF or the NF includes: sending, by the network data analytics function, the first information to the AF or the NF through a first network element; or sending, by the network data analytics function, the first information to the AF or the NF directly.

In some optional embodiments of the disclosure, the method further includes: receiving, by the network data analytics function, third information from the AF or the NF, wherein the third information is configured to subscribe PFD analysis information and/or PFD information, and the third information includes the first application identifier.

In some optional embodiments of the disclosure, receiving, by the network data analytics function, the third information from the AF or the NF includes: receiving, by the network data analytics function, the third information from the AF or the NF through a first network element; or receiving, by the network data analytics function, the third information from the AF or the NF directly.

In some optional embodiments of the disclosure, the first PFD analysis information includes the first PFD information.

In some optional embodiments of the disclosure, the method further includes: obtaining, by the network data analytics function, the first PFD analysis information corresponding to the first application identifier and/or the first PFD information corresponding to the first application identifier.

In some optional embodiments of the disclosure, the method further includes: obtaining, by the network data analytics function, first user plane information from a user plane function.

In some optional embodiments of the disclosure, the method further includes: obtaining, by the network data analytics function, second PFD information from a unified data repository function through a first network element; and/or obtaining, by the network data analytics function, third PFD information and/or second user plane information from an analytics data repository function, wherein the third PFD information and/or the second user plane information is information within a first historical time range.

In some optional embodiments of the disclosure, the first network element includes: a network exposure function and/or a packet flow description function.

In a third aspect, embodiments of the disclosure further provide a method for communication, including: receiving, by a first network element, second information from an application function (AF) or a network function (NF), and sending third information to a unified data repository function, wherein the second information is configured to request processing packet flow description (PFD) information corresponding to a first application identifier, the third information is configured to request processing the PFD information corresponding to the first application identifier in the unified data repository function, and the processing includes at least one of creation, update and deletion.

In some optional embodiments of the disclosure, the second information and the third information include the PFD information to be processed and/or the first application identifier.

In some optional embodiments of the disclosure, the method further includes: receiving, by the first network element, first information from a network data analytics function, and sending the first information to the AF or the NF, wherein the first information includes first PFD analysis information corresponding to the first application identifier and/or first PFD information corresponding to the first application identifier.

In some optional embodiments of the disclosure, the first PFD analysis information includes the first PFD information.

In some optional embodiments of the disclosure, the method further includes: receiving, by the first network element, third information from the AF or the NF, and sending the third information to a network data analytics function, wherein the third information is configured to subscribe PFD analysis information and/or PFD information, and the third information includes the first application identifier.

In some optional embodiments of the disclosure, the method further includes: receiving, by the first network element, first subscription information from a network data analytics function, wherein the first subscription information is configured to subscribe PFD information corresponding to the first application identifier; and querying, by the first network element, the unified data repository function to obtain second PFD information corresponding to the first application identifier, and sending the second PFD information to the network data analytics function.

In some optional embodiments of the disclosure, the first network element includes: a network exposure function and/or a packet flow description function.

In a fourth aspect, embodiments of the disclosure further provide a method for communication, including: receiving, by a first network element, fourth information from a network data analytics function, wherein the fourth information includes second packet flow description (PFD) analysis information corresponding to a second application identifier and/or fourth PFD information corresponding to the second application identifier; obtaining, by the first network element, fifth information from a unified data repository function, wherein the fifth information includes fifth PFD information corresponding to the second application identifier; and sending, by the first network element, sixth information to the unified data repository function, wherein the sixth information is configured to request processing PFD information corresponding to the second application identifier, and the processing includes at least one of creation, update and deletion.

In some optional embodiments of the disclosure, the sixth information includes the PFD information to be processed and/or the second application identifier.

In some optional embodiments of the disclosure, the second PFD analysis information includes the fourth PFD information.

In some optional embodiments of the disclosure, the fifth PFD information includes at least one piece of PFD information; each piece of PFD information in the fifth PFD information includes a first identifier indicating whether the PFD information is from the network data analytics function or an application function (AF).

In some optional embodiments of the disclosure, a priority of PFD information from the AF is higher than a priority of PFD information from the network data analytics function.

In some optional embodiments of the disclosure, sending, by the first network element, the sixth information to the unified data repository function includes: comparing, by the first network element, the fourth PFD information with the fifth PFD information, and sending the sixth information to the unified data repository function.

In some optional embodiments of the disclosure, comparing, by the first network element, the fourth PFD information with the fifth PFD information, and sending the sixth information to the unified data repository function includes: comparing, by the first network element, the fourth PFD information with the fifth PFD information; sending the sixth information to the unified data repository function in a case that the fourth PFD information is not duplicated with the fifth PFD information, wherein the sixth information is configured to request creating PFD information corresponding to the second application identifier; and/or sending the sixth information to the unified data repository function in a case that the fourth PFD information is duplicated with the fifth PFD information and the first identifier of PFD information duplicated with the fourth PFD information in the fifth PFD information indicates that the PFD information is from the network data analytics function, wherein the sixth information is configured to request updating and/or deleting PFD information corresponding to the second application identifier.

In some optional embodiments of the disclosure, the method further includes: sending, by the first network element, seventh information to the network data analytics function, wherein the seventh information is configured to subscribe PFD analysis information and/or PFD information, and the sixth information includes the second application identifier.

In some optional embodiments of the disclosure, the method further includes: receiving, by the first network element, second subscription information from the network data analytics function, wherein the second subscription information is configured to subscribe PFD information corresponding to the second application identifier; and querying, by the first network element, the unified data repository function to obtain sixth PFD information corresponding to the second application identifier, and sending the sixth PFD information to the network data analytics function.

In some optional embodiments of the disclosure, the method further includes: the fourth PFD information includes a PFD information overall set, and the PFD information overall set includes all PFD information ever provided by the network data analytics function, and all the PFD information includes PFD information to be processed; or the fourth PFD information includes a PFD information subset which consists of the PFD information to be processed.

In some optional embodiments of the disclosure, the fourth PFD information includes at least one piece of PFD information, each of at least a portion of the at least one piece of PFD information includes a second identifier indicating whether the PFD information is valid or invalid.

In some optional embodiments of the disclosure, the first network element includes: a network exposure function and/or a packet flow description function.

In a fifth aspect, embodiments of the disclosure further provide a method for communication, including: sending, by a network data analytics function, fourth information to a first network element, wherein the fourth information includes second PFD analysis information corresponding to a second application identifier and/or fourth PFD information corresponding to the second application identifier, the fourth information is used for the first network element to determine or decide to request processing PFD information corresponding to the second application identifier, and the processing includes at least one of creation, update and deletion.

In some optional embodiments of the disclosure, the second PFD analysis information includes the fourth PFD information.

In some optional embodiments of the disclosure, the method further includes: receiving, by the network data analytics function, seventh information from the first network element, wherein the seventh information is configured to subscribe PFD analysis information and/or PFD information, and the seventh information includes the second application identifier.

In some optional embodiments of the disclosure, the method further includes: obtaining, by the network data analytics function, the second PFD analysis information corresponding to the second application identifier and/or the fourth PFD information corresponding to the second application identifier.

In some optional embodiments of the disclosure, the method further includes: obtaining, by the network data analytics function, third user plane information from a user plane function.

In some optional embodiments of the disclosure, the method further includes: obtaining, by the network data analytics function, sixth PFD information from a unified data repository function through a first network element; and/or obtaining, by the network data analytics function, seventh PFD information and/or fourth user plane information from an analytics data repository function, wherein the seventh PFD information and/or the seventh user plane information is information within a second historical time range.

In some optional embodiments of the disclosure, the fourth PFD information includes a PFD information overall set, and the PFD information overall set includes all PFD information ever provided by the network data analytics function, and all the PFD information includes PFD information to be processed; or the fourth PFD information includes a PFD information subset which consists of the PFD information to be processed.

In some optional embodiments of the disclosure, the fourth PFD information includes at least one piece of PFD information, each of at least a portion of the at least one piece of PFD information includes a second identifier indicating whether the PFD information is valid or invalid.

In some optional embodiments of the disclosure, the first network element includes: a network exposure function and/or a packet flow description function.

In a sixth aspect, embodiments of the disclosure further provide a method for communication, including: sending, by a unified data repository function, fifth information to a first network element, wherein the fifth information includes fifth PFD information corresponding to a second application identifier, the fifth information is used for the first network element to determine or decide to request processing PFD information corresponding to the second application identifier, and the processing includes at least one of creation, update and deletion.

In some optional embodiments of the disclosure, the fifth PFD information includes at least one piece of PFD information, and each piece of PFD information in the fifth PFD information includes a first identifier indicating whether the PFD information is from a network data analytics function or an application function (AF).

In some optional embodiments of the disclosure, a priority of PFD information from the AF is higher than a priority of PFD information from the network data analytics function.

In some optional embodiments of the disclosure, the method further includes: receiving, by the unified data repository function, sixth information from the first network element, wherein the sixth information is configured to request processing PFD information corresponding to the second application identifier, and the processing includes at least one of creation, update and deletion.

In some optional embodiments of the disclosure, the sixth information includes the PFD information to be processed and/or the second application identifier.

In some optional embodiments of the disclosure, the first network element includes: a network exposure function and/or a packet flow description function.

In a seventh aspect, embodiments of the disclosure further provide an apparatus for communication, applied to an application function (AF) or a network function (NF), and including a first receiving unit and a first sending unit, wherein the first receiving unit is configured to receive first information from a network data analytics function, wherein the first information includes first packet flow description (PFD) analysis information corresponding to a first application identifier and/or first PFD information corresponding to the first application identifier; and the first sending unit is configured to send second information to a first network element, wherein the second information is configured to request processing PFD information corresponding to the first application identifier, and the processing includes at least one of creation, update and deletion.

In an eighth aspect, embodiments of the disclosure further provide an apparatus for communication, applied to a network data analytics function, and includes a second sending unit configured to send first information to an application function (AF) or a network function (NF), wherein the first information includes first packet flow description (PFD) analysis information corresponding to a first application identifier and/or first PFD information corresponding to the first application identifier.

In a ninth aspect, embodiments of the disclosure further provide an apparatus for communication, applied to a first network element, and including a third receiving unit and a third sending unit, wherein the third receiving unit is configured to receive second information from an application function (AF) or a network function (NF), wherein the second information is configured to request processing PFD information corresponding to a first application identifier; and the third sending unit is configured to send third information to a unified data repository function, wherein the third information is configured to request processing PFD information corresponding to the first application identifier in the unified data repository function, and the processing includes at least one of creation, update and deletion.

In a tenth aspect, embodiments of the disclosure further provide n apparatus for communication, applied to a first network element, and including a fourth receiving unit and a fourth sending unit, wherein the fourth receiving unit is configured to receive fourth information from a network data analytics function, wherein the fourth information includes second packet flow description (PFD) analysis information corresponding to a second application identifier and/or fourth PFD information corresponding to the second application identifier; and the fourth receiving unit is further configured to obtain fifth information from a unified data repository function, wherein the fifth information includes fifth PFD information corresponding to the second application identifier; and the fourth sending unit is configured to send sixth information to the unified data repository function, wherein the sixth information is configured to request processing PFD information corresponding to the second application identifier, and the processing includes at least one of creation, update and deletion.

In a eleventh aspect, embodiments of the disclosure further provide an apparatus for communication, applied to a network data analytics function, and including a fifth sending unit, wherein the fifth sending unit is configured to send fourth information to a first network element, the fourth information includes second PFD analysis information corresponding to a second application identifier and/or fourth PFD information corresponding to the second application identifier, and the fourth information is used for determining or deciding to request processing PFD information corresponding to the second application identifier, and the processing includes at least one of creation, update and deletion.

In a twelfth aspect, embodiments of the disclosure further provide an apparatus for communication, applied to a unified data repository function, and including a sixth sending unit, wherein the sixth sending unit is configured to send fifth information to a first network element, wherein the fifth information includes fifth PFD information corresponding to a second application identifier, the fifth information is used for determining or deciding to request processing PFD information corresponding to the second application identifier, and the processing includes at least one of creation, update and deletion.

In a thirteenth aspect, embodiments of the disclosure further provide a computer-readable storage medium stored with a computer program, wherein the computer program, when executed by a processor, implements the steps of the method for communication of any one of the above first to sixth aspects.

In a fourteenth aspect, embodiments of the disclosure further provide communication device, including a memory, a processor, and a computer program that is stored in the memory and is capable of being run on the processor, wherein processor executes the computer program to implement the steps of the method for communication of any one of the above first to sixth aspects.

Embodiments of the disclosure provide a method and apparatus for communication, a communication device and a computer storage medium. In a first aspect, the method includes that an application function (AF) or a network function (NF) receives first information from a network data analytics function. The first information includes first packet flow description (PFD) analysis information corresponding to a first application identifier and/or first PFD information corresponding to the first application identifier. The AF or the NF sends second information to a first network element. The second information is configured to request processing PFD information corresponding to the first application identifier, and the processing includes at least one of creation, update and deletion. According to the technical solution of the embodiments of the disclosure, the PFD information is transmitted to the AF or the NF by the network data analytics function, and the AF or the NF transmits information to the first network element uniformly, thereby solving the problem that PFD information output by the network data analytics function to the NEF is duplicated with PFD information sent by the AF to the NEF.

In a second aspect, the method includes that the first network element receives fourth information from a network data analytics function. The fourth information includes second packet flow description (PFD) analysis information corresponding to a second application identifier and/or fourth PFD information corresponding to the second application identifier. The first network element obtains fifth information from a unified data repository function. The fifth information includes fifth PFD information corresponding to the second application identifier. The first network element sends sixth information to the unified data repository function. The sixth information is configured to request processing PFD information corresponding to the second application identifier, and the processing includes at least one of creation, update and deletion. In the technical solutions of the disclosure, information is sent to a unified data repository function through a first network element so that the problem that PFD information output to an NEF by an NWDAF is duplicated with PFD information sent to the NEF by an AF is solved.

### BRIEF DESCRIPTION OF THE DRAWINGS

FIG. 1 illustrates a first schematic flowchart of a method for communication according to embodiments of the disclosure.
FIG. 2 illustrates a second schematic flowchart of a method for communication according to embodiments of the disclosure.
FIG. 3 illustrates a third schematic flowchart of a method for communication according to embodiments of the disclosure.
FIG. 4 illustrates a first schematic diagram of an interaction procedure of a method for communication according to embodiments of the disclosure.
FIG. 5 illustrates a second schematic diagram of an interaction procedure of a method for communication according to embodiments of the disclosure.
FIG. 6 illustrates a fourth schematic flowchart of a method for communication according to embodiments of the disclosure.
FIG. 7 illustrates a fifth schematic flowchart of a method for communication according to embodiments of the disclosure.
FIG. 8 illustrates a sixth schematic flowchart of a method for communication according to embodiments of the disclosure.
FIG. 9 illustrates a third schematic diagram of an interaction procedure of the method for communication according to embodiments of the disclosure.
FIG. 10 illustrates a first schematic structural diagram of composition of an apparatus for communication according to embodiments of the disclosure.
FIG. 11 illustrates a second schematic structural diagram of composition of an apparatus for communication according to embodiments of the disclosure.
FIG. 12 illustrates a third schematic structural diagram of composition of an apparatus for communication according to embodiments of the disclosure.
FIG. 13 illustrates a fourth schematic structural diagram of composition of an apparatus for communication according to embodiments of the disclosure.
FIG. 14 illustrates a fifth schematic structural diagram of composition of an apparatus for communication according to embodiments of the disclosure.
FIG. 15 illustrates a sixth schematic structural diagram of composition of an apparatus for communication according to embodiments of the disclosure.
FIG. 16 illustrates a schematic structural diagram of hardware composition of a communication device according to embodiments of the disclosure.

### DETAILED DESCRIPTION

The disclosure is further described in detail in conjunction with the accompanying drawings and particular embodiments.

The technical solution of the embodiments of the disclosure may be applied to various communication systems, for example, a global system of mobile communication (GSM) system, a long term evolution (LTE) system, a 5th generation (5G) system or the like. Optionally, the 5G system or 5G network may also be referred to as a new radio (NR) system or NR network.

Exemplarily, the communication system to which the embodiments of the disclosure are applied may include a network device and a terminal device (or may be referred to as a terminal, a communication terminal or the like). The network device may be a device communicating with the terminal device. The network device can provide communication coverage for a specific area, and can communicate with the terminal within the coverage. Optionally, the network device may be a base station in various communication systems, for example an evolutional NodeB (eNB) in an LTE system, or a base station (gNB) in a 5G system or NR system.

It is to be understood that devices having a communication function in the network/system in the embodiments of the disclosure may be referred to as a communication device. The communication device may include a network device and a terminal that have a communication function. The network device and the terminal device may be particular devices described above, which will not be described herein again. The communication devices may further include other devices in the communication system, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example A and/or B may represent following three cases: existence of A alone, existence of both A and B, and existence of B alone. Additionally, the character "/" generally indicates that the contextual objects are in an "or" relationship.

The terms "first", "second", etc. in the description and claims of the disclosure are used to distinguish similar objects, and do not necessarily describe a specific sequence or ranking order. It should be understood that such used terms may be interchangeable where appropriate so that the embodiments of the disclosure described herein, for example, can be implemented in an order other than those depicted or described herein. In addition, the terms "comprise/include" and "have" and any variants thereof are intended to cover non-exclusive inclusion. For example, a process, method, system, product or device containing a series of steps or units is not necessarily limited to those steps or units clearly listed, and can include other steps or units not clearly listed or inherent to the process, method, system, product or device.

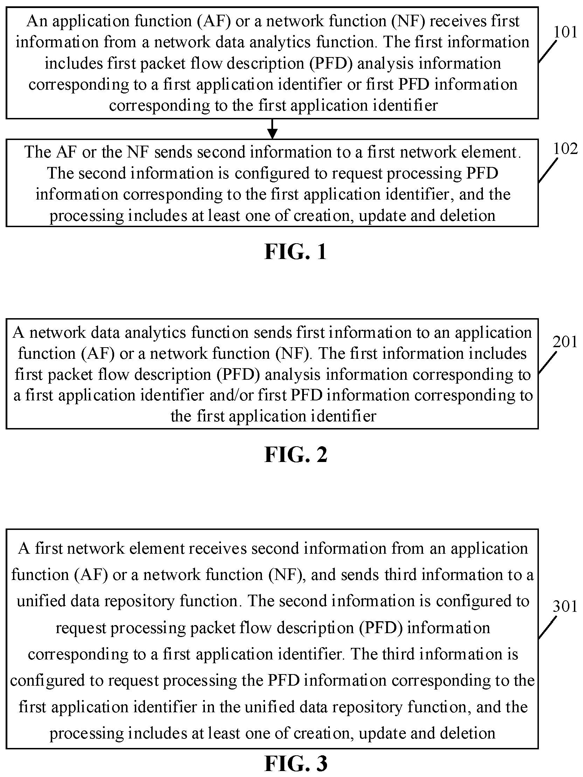

Embodiments of the disclosure provide a method for communication. FIG. 1 illustrates a first schematic flowchart of a method for communication according to embodiments of the disclosure. As illustrated in FIG. 1, the method includes following operations.

At 101, an application function (AF) or a network function (NF) receives first information from a network data analytics function. The first information includes first packet flow description (PFD) analysis information corresponding to a first application identifier or first PFD information corresponding to the first application identifier.

At 102, the AF or the NF sends second information to a first network element. The second information is configured to request processing PFD information corresponding to the first application identifier, and the processing includes at least one of creation, update and deletion.

In various embodiments of the disclosure, the first network element at least includes: a network exposure function and/or a packet flow description function. The network exposure function (NEF) may specifically be a network element having a network exposure capability. Exemplarily, the network exposure function may be a NEF network element in a 5th-generation (5G) system, or may be another network element having a network exposure capability in a 6th-generation (6G) system or subsequent system, which is not specifically limited herein. The Packet Flow Description Function (PFDF) may specifically be a network element having at least the capability of processing and/or managing PFD information. Exemplarily, the Packet Flow Description Function (PFDF) may be a PFDF network element in a 5G system, or may be another network element having the capability of processing and/or managing PFD information in a 6G system and subsequent systems. In other embodiments, for example in a 5G system, the first network element may also be denoted as a NEF (PFDF).

In various embodiments of the disclosure, the network data analytics function may specifically be a network element having a data analysis function (or capability), and may also be referred to as a second network element in other embodiments. Exemplarily, the network data analytics function (NWDAF) may be an NWDAF in a 5G system, or may be other network elements having data analysis functions (or capabilities) in a 6G system and subsequent systems, which is not specifically limited herein.

In some optional embodiments, the first PFD analysis information includes the first PFD information.

In this embodiment, the AF or the NF receives the first information from the network data analytics function. The first information includes first PFD analysis information and/or first PFD information. The first PFD analysis information and/or the first PFD information is information obtained by the network data analytics function (for example, PFD analysis information and/or PFD information obtained by the network data analytics function by deduction). As an implementation, the first information includes the first PFD analysis information, and the first PFD analysis information includes the first PFD information. The PFD analysis information may represent an analysis result of the network data analytics function. As another implementation, the first information may include only the first PFD information. In other implementations, the first information may include the first PFD analysis information and/or the first PFD information, and/or the first information includes the first application identifier.

In this embodiment, after receiving the first information, the AF or the NF may determine, based on the first information, whether PFD information corresponding to the first application identifier needs to be processed. When determining that PFD information corresponding to the first application identifier needs to be processed, the AF or the NF sends the second information to the first network element. The first application identifier may also be denoted as an Application ID.

As an example, the AF (or the NF) may compare the first PFD information with the PFD information provided by the AF (or the NF) itself (or may perform comparison, detection, recognition, identification, matching, check, etc.), and determine, according to a comparison result (or may be a comparison result, a detection result, a recognition result, an identification result, a matching result, a check result, etc.), that PFD information corresponding to the first application identifier needs to be processed. As another example, the first PFD analysis information may include a related analysis result or related indication information about whether PFD information needs to be processed. The AF (or the NF) may determine whether PFD information needs to be processed (e.g., at least one of creation, update, and deletion) based on the analysis result or indication information in the first PFD analysis information directly. In this embodiment, processing PFD information specifically means processing (e.g., at least one of creating, updating, and deleting) PFD information stored in a unified data repository function. For example, if PFD information needs to be created, the corresponding PFD information needs to be created in the unified data repository function. For another example, if PFD information needs to be updated or deleted, the corresponding PFD information stored in the unified data repository function needs to be updated or deleted.

In some optional embodiments, the second information includes the PFD information to be processed and/or the first application identifier.

In some examples, the PFD information to be processed may be the first PFD information. In some other examples, the PFD information to be processed may be PFD information to be processed, which is determined by the AF (or the NF). For example, after comparing the first PFD information with the PFD information provided by the AF (or NF) itself, new PFD information in the first PFD information, compared to the PFD information provided by the AF (or NF) itself, is the PFD information that needs to be processed (at least one of creation, update, and deletion). In such an example, the PFD information to be processed may be at least partial information in the first PFD information.

In some optional embodiments, the operation that the AF or the NF receives the first information from the network data analytics function includes: the AF or the NF receives the first information from the network data analytics function through the first network element; or the AF or the NF receives the first information from the network data analytics function directly.

In some optional embodiments of the disclosure, the method further includes that the AF or the NF sends third information to the network data analytics function. The third information is configured to subscribe PFD analysis information and/or PFD information, and the third information includes the first application identifier.

In this embodiment, the AF or the NF may send third information to the network data analytics function. Optionally, based on the subscription, the AF or the NF receives the first information from the network data analytics function.

In some optional embodiments, the operation that the AF or the NF sends the third information to the network data analytics function includes: the AF or the NF sends the third information to the network data analytics function through the first network element; or the AF or the NF sends the third information to the network data analytics function directly.

Embodiments of the disclosure further provide a method for communication. FIG. 2 illustrates a second schematic flowchart of a method for communication according to embodiments of the disclosure. As illustrated in FIG. 2, the method includes following operations.

At 201, a network data analytics function sends first information to an application function (AF) or a network function (NF). The first information includes first packet flow description (PFD) analysis information corresponding to a first application identifier and/or first PFD information corresponding to the first application identifier. The first information is used for the AF or the NF to request processing PFD information corresponding to the first application identifier, and the processing includes at least one of creation, update and deletion.

In some optional embodiments, the first PFD analysis information includes the first PFD information.

In this embodiment, the first network element at least includes: a network exposure function and/or a packet flow description function. In other embodiments, for example in a 5G system, the first network element may also be denoted as a NEF (PFDF).

In this embodiment, the network data analytics function sends the first information to the AF or the NF. The first information includes the first PFD analysis information and/or the first PFD information. The first PFD analysis information and/or the first PFD information is information obtained by the network data analytics function (for example, PFD analysis information and/or PFD information obtained by the network data analytics function by deduction). As an implementation, the first information includes the first PFD analysis information, and the first PFD analytics information includes the first PFD information. The PFD analysis information may represent an analysis result of the network data analytics function. As another implementation, the first information may include only the first PFD information as well. In other implementations, the first information may include the first PFD analysis information and/or the first PFD information, and/or the first information includes the first application identifier.

In this embodiment, the first information is used for the AF or the NF to decide, determine or judge whether PFD information corresponding to the first application identifier needs to be processed, or to decide, determine or judge whether there is a need to request processing PFD information corresponding to the first application identifier. The processing includes at least one of creation, update and deletion.

In some optional embodiments, the operation that the network data analytics function sends the first information to the AF or the NF includes: the network data analytics function sends the first information to the AF or the NF through a first network element; or the network data analytics function sends the first information to the AF or the NF directly.

In some optional embodiments of the disclosure, the method further includes that the network data analytics function receives third information from the AF or the NF. The third information is configured to subscribe PFD analysis information and/or PFD information, and the third information includes the first application identifier.

In this embodiment, the network data analytics function may receive third information from the AF or the NF. The third information is configured to subscribe PFD analysis information and/or PFD information. Based on the subscription, the network data analytics function sends the first information to the AF or the NF.

In some optional embodiments, the operation that the network data analytics function receives the third information from the AF or the NF includes: the network data analytics function receives the third information from the AF or the NF through a first network element; or the network data analytics function receives the third information from the AF or the NF directly.

In some optional embodiments of the disclosure, the method further includes that the network data analytics function obtains first user plane information from a user plane function.

The user plane function may specifically be a network element having a capability of processing and/or transmitting user plane data, and may also be referred to as a third network element in other embodiments. Exemplarily, the user plane function (UPF) may be a UPF in a 5G system, or may be other network elements having a capability of processing and/or transmitting user plane data in a 6G system and subsequent systems, which is not specifically limited herein.

In this embodiment, the network data analytics function may obtain first user plane information corresponding to the first application identifier from the user plane function. Optionally, the first user plane information may specifically be a service message.

In some optional embodiments of the disclosure, the method further includes that the network data analytics function obtains the first PFD analysis information corresponding to the first application identifier and/or the first PFD information corresponding to the first application identifier.

In this embodiment, the network data analytics function obtains the first PFD analysis information corresponding to the first application identifier and/or the first PFD information corresponding to the first application identifier by deduction using a pre-trained model. In some examples, the network data analytics function may obtain the first PFD analysis information corresponding to the first application identifier and/or the first PFD information corresponding to the first application identifier by deduction based on the first user plane information and a pre-trained model.

In some optional embodiments of the disclosure, the method further includes that: the network data analytics function obtains second PFD information from a unified data repository function through a first network element; and/or the network data analytics function obtains third PFD information and/or second user plane information from an analytics data repository function. The third PFD information and/or the second user plane information is information within a first historical time range.

In various embodiments of the disclosure, the unified data repository function may specifically be a network element having a data repository capability, or may be referred to as a fourth network element in other embodiments. Exemplarily, the unified data repository (UDR) function may be a UDR network element in a 5G system, or may be other network elements having a data repository capability in a 6G system and subsequent systems, which is not specifically limited herein. The analytics data repository function may specifically be a network element having a capability of collecting historical data and/or storing analytics data, and may also be referred to as a fifth network element in other embodiments. Exemplarily, the analytics data repository function (ADRF) may be an ADRF network element in a 5G system, or may be other network elements having a capability of collecting historical data and/or storing analytics data in a 6G system and subsequent systems, which is not specifically limited herein.

In this embodiment, the network data analytics function may obtain second PFD information from a unified data repository function through a first network element, and/or obtain third PFD information and/or second user plane information within a historical time range from an analytics data repository function, and train the model based on the third PFD information and/or the second user plane information, or based on at least one of the third PFD information, the second user plane information and the second PFD information. Exemplarily, the network data analytics function may subscribe PFD information from the NEF, and the NEF queries the unified data repository function to obtain the second PFD information and then transmits the second PFD information to the network data analytics function. Exemplarily, the network data analytics function may send request information to the analytics data repository function, and the request information is configured to request acquiring third PFD information and/or second user plane information within a historical time range. The request information may include a historical time period or a time window. Optionally, the request information may further include an Application ID.

In this embodiment, the network data analytics function may train a model using the information obtained above, and further obtain the first PFD analysis information and/or the first PFD information according to the model.

In some optional embodiments, the first PFD analysis information may represent an analysis result of the network data analytics function. The analysis result may include whether PFD information needs to be processed (e.g., at least one of creation, update, and deletion). Exemplarily, the network data analytics function may obtain the first PFD information corresponding to the first application identifier through deduction of a model, and then compare the obtained first PFD information with known PFD information (such as PFD information obtained from the unified data repository function), so as to determine whether the deduced first PFD information is new PFD information. If the deduced first PFD information is new PFD information, it may be determined that PFD information needs to be processed. The analysis result (first PFD analysis information) may include the first PFD information, and the first PFD analysis information may include a related analysis result or related indication information indicating that PFD information needs to be processed.

Based on the above embodiment, embodiments of the disclosure further provide a method for communication. FIG. 3 illustrates a third schematic flowchart of a method for communication according to embodiments of the disclosure. As illustrated in FIG. 3, the method includes following operations.

At 301, a first network element receives second information from an application function (AF) or a network function (NF), and sends third information to a unified data repository function. The second information is configured to request processing packet flow description (PFD) information corresponding to a first application identifier. The third information is configured to request processing the PFD information corresponding to the first application identifier in the unified data repository function, and the processing includes at least one of creation, update and deletion.

In this embodiment, the first network element at least includes: a network exposure function and/or a packet flow description function. In other embodiments, for example in a 5G system, the first network element may be denoted as a NEF (PFDF).

In some optional embodiments, the second information and the third information includes the PFD information to be processed and/or the first application identifier.

In this embodiment, a first network element receives, from an application function (AF) or a network function (NF), second information configured to request processing PFD information corresponding to a first application identifier, and sends, to a unified data repository function, third information configured to request processing the PFD information. The second information and the third information include the PFD information to be processed and/or the first application identifier. Optionally, the second information and the third information may be carried by different messages.

In some examples, the PFD information to be processed may be the first PFD information. In some other examples, the PFD information to be processed may also be PFD information to be processed, which is determined by the AF (or the NF). For example, after comparing the first PFD information with the PFD information provided by the AF (or NF) itself, new PFD information in the first PFD information compared to the PFD information provided by the AF (or NF) itself is the PFD information that needs to be processed (at least one of creation, update, and deletion). In such an example, the PFD information to be processed may be at least partial information in the first PFD information.

In some optional embodiments of the disclosure, the method further includes that the first network element receives first information from a network data analytics function, and sends the first information to the AF or the NF. The first information includes first PFD analysis information corresponding to the first application identifier and/or first PFD information corresponding to the first application identifier.

In some optional embodiments, the first PFD analysis information includes the first PFD information.

In some optional embodiments of the disclosure, the method further includes that the first network element receives third information from the AF or the NF, and sends the third information to a network data analytics function. The third information is configured to subscribe PFD analysis information and/or PFD information, and the third information includes the first application identifier.

In the above embodiment, the AF (or the NF) interacts with the network data analytics function through the first network element.

In some optional embodiments of the disclosure, the method further includes that the first network element receives first subscription information from a network data analytics function. The first subscription information is configured to subscribe PFD information corresponding to the first application identifier. The method further includes that the first network element queries the unified data repository function to obtain second PFD information corresponding to the first application identifier, and sends the second PFD information to the network data analytics function.

According to the technical solution of the embodiments of the disclosure, the PFD information is transmitted to the AF or the NF by the network data analytics function, and the AF or the NF transmits information to the first network element in a unified manner, thereby solving the problem that PFD information output by the network data analytics function to the NEF is duplicated with PFD information sent by the AF to the NEF.

Hereinafter, the method for communication according to embodiments of the present disclosure will be described in detail with reference to specific examples. In following examples, description is made with the first network element being a network exposure function (NEF) (PFDF), a network data analytics function being NWDAF, a user plane function being UPF, a unified data repository function being UDR, and an analytic data repository function specifically being an ADRF as an example.

### Example I

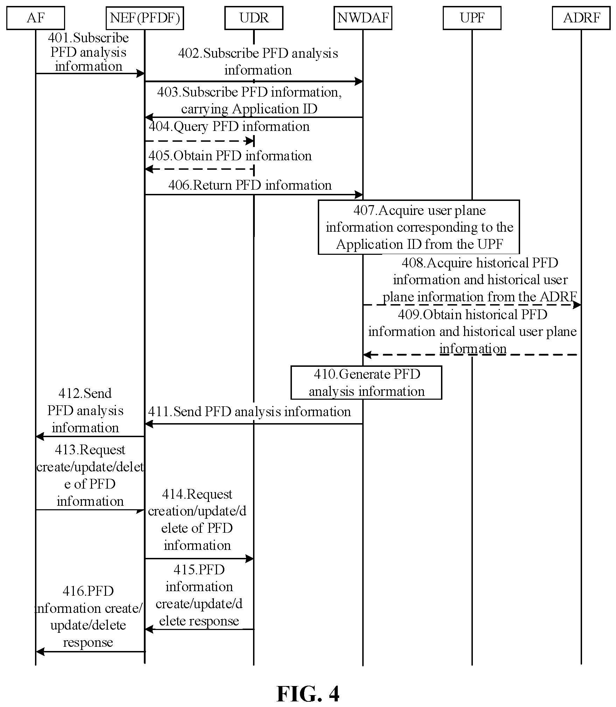

FIG. 4 illustrates a first schematic diagram of an interaction procedure of a method for communication according to embodiments of the disclosure. As illustrated in FIG. 4, the method includes following operations.

At 401 to 402, an AF subscribes PFD analysis information from an NWDAF through an NEF (PFDF), the subscription carrying an application identifier (Application ID).

Here, the AF may invoke Nnef_AnalyticsExposure_Subscribe to subscribe the PFD analysis information from the NWDAF, the subscription carrying at least the Application ID; and the NEF invokes Nnwdaf_AnalyticsSubscription_Subscribe to subscribe the PFD analysis information from the NWDAF, the subscription carrying at least the Application ID.

At 403 to 406: the NWDAF subscribes PFD information in use from the NEF (PFDF), the subscription carrying the Application ID; the NEF (PFDF) invokes Nudr_DM_Query to query a UDR for PFD information, the query carrying the Application ID; and the NEF (PFDF) obtains and returns the PFD information to the NWDAF.

Here, the NWDAF may invoke Nnef_EventExposure_Subscribe to subscribe the PFD in use from the NEF (PFDF), the subscription carrying at least the Application ID. The NEF (PFDF) invokes Nudr_DM_Query to query the UDR for the PFD information, the query carrying the Application ID. The NEF (PFDF) obtains the queried PFD information through a response corresponding to the Nudr_DM_Query, and returns the PFD information to the NWDAF through the Nnef_EventExposure_Notify. The PFD information herein corresponds to the second PFD information in the previous embodiment.

At 407, the NWDAF acquires user plane information corresponding to the Application ID from the UPF.

The user plane information herein corresponds to the first user plane information in the previous embodiment.

At 408 to 409, the NWDAF acquires historical PFD information and historical user plane information from an ADRF, by carrying the Application ID and further carrying a historical time period or a time window.

Here, the NWDAF requests, through Nadrf_DataManagement_RetrievalRequest, the ADRF for acquiring the historical PFD information and the historical user plane information. The request carries the Application ID, and further carries the historical time period or the time window. The NWDAF receives, through Nadrf_DataManagement_RetrievalResponse, the historical PFD information and the historical user plane information returned by the ADRF.

The historical PFD information corresponds to the third PFD information in the previous embodiment, and the historical user plane information corresponds to the second user plane information in the previous embodiment.

At 410, the NWDAF generates PFD analysis information.

Exemplarily, the NWDAF may obtain the PFD analysis information through inference or deduction. The PFD analysis information herein corresponds to the first PFD analysis information in the previous embodiment.

At 411 to 412, the NWDAF sends the PFD analysis information to the NEF (PFDF), and the NEF (PFDF) sends the PFD analysis information to the AF.

Here, the NWDAF may send the PFD analysis information to the NEF (PFDF) through Nnwdaf_AnalyticsSubscription _Notify. The NEF (PFDF) may send the PFD analysis information to the AF through Nnef_AnalyticsExposure_Notify.

At 413, after obtaining the PFD analysis information, the AF determines whether there is a need to create/update/delete the PFD information corresponding to the Application ID; and if yes, the AF sends a request to the NEF (PFDF) to request creation/update/deletion of the PFD information.

Here, the AF may invoke Nnef_PFDManagement_Create/Update/Delete to request the NEF (PFDF) for creation/update/deletion of the PFD information, that is, the AF sends a Nnef_PFDManagement_Create/Update/Delete Request to the NEF (PFDF).

At 414 to 415, The NEF (PFDF) requests the UDR to create/update/delete the PFD information. After performing the corresponding processing, the UDR returns a corresponding response to the NEF (PFDF).

Here, the NEF (PFDF) invokes Nudr_DM_Create/Update/Delete from the UDR and sends the Nudr_DM_Create/Update/Delete Request to the UDR to request the DUR to create/update/delete the PFD information, the request carrying the Application ID and the corresponding PFD information. The UDR creates/updates/deletes the corresponding PFD information and sends a Nudr_DM_Create/Update/Delete Response to the NEF (PFDF).

At 416, the NEF (PFDF) returns a response to the AF.

Here, the NEF (PFDF) sends a Nnef_PFDManagement_Create/Update/Delete Response to the AF.

### Example II

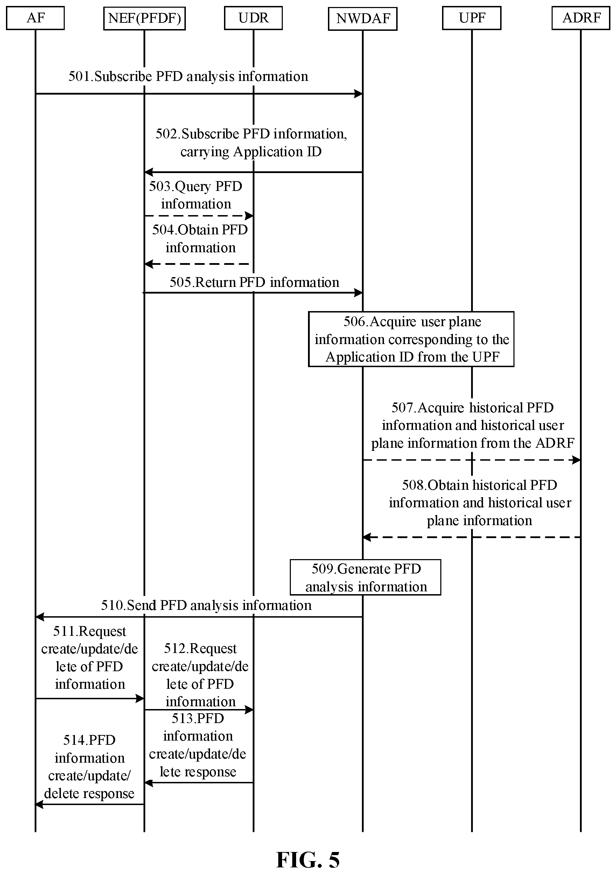

FIG. 5 illustrates a second schematic diagram of an interaction procedure of a method for communication according to embodiments of the disclosure. As illustrated in FIG. 5, the method includes following operations.

At 501, an AF subscribes PFD analysis information from an NWDAF, the subscription carrying an application identifier (Application ID).

Here, the AF may invoke Nnwdaf_AnalyticsExposure_Subscribe to subscribe the PFD analysis information from the NEF, the subscription carrying at least the application ID.

At 502 to 505, the NWDAF subscribes PFD information in use from the NEF (PFDF), the subscription carrying the Application ID; the NEF (PFDF) invokes Nudr_DM_Query to query a UDR for PFD information, the query carrying the Application ID; and the NEF (PFDF) obtains and returns the PFD information to the NWDAF.

Here, the NWDAF may invoke Nnef_EventExposure_Subscribe to subscribe the PFD in use from the NEF (PFDF), the subscription carrying at least the Application ID. The NEF invokes Nudr_DM_Query to query the UDR for the PFD information, the query carrying the Application ID. The NEF (PFDF) obtains the queried PFD information through a response message corresponding to the Nudr_DM_Query, and returns the PFD information to the NWDAF through the Nnef_EventExposure _Notify. The PFD information herein corresponds to the second PFD information in the previous embodiment.

At 506, the NWDAF acquires user plane information corresponding to the Application ID from the UPF.

The user plane information herein corresponds to the first user plane information in the previous embodiment.

At 507 to 508, the NWDAF acquires historical PFD information and historical user plane information from an ADRF, by carrying the Application ID and further carrying a historical time period or a time window.

Here, the NWDAF requests, through Nadrf_DataManagement_RetrievalRequest, the ADRF for acquiring the historical PFD information and the historical user plane information. The request carries the Application ID, and further carries the historical time period or the time window. The NWDAF receives, through Nadrf_DataManagement _RetrievalResponse, the historical PFD information and the historical user plane information returned by the ADRF.

The historical PFD information corresponds to the third PFD information in the previous embodiment, and the historical user plane information corresponds to the second user plane information in the previous embodiment.

At 509, the NWDAF generates PFD analysis information.

Exemplarily, the NWDAF may obtain the PFD analysis information through inference or deduction. The PFD analysis information herein is equivalent to the first PFD analysis information in the previous embodiment.

At 510, the NWDAF sends the PFD analysis information to the AF.

Here, the NWDAF may send the PFD analysis information to the AF through Nnwdaf_AnalyticsSubscription_Notify.

At 511, after obtaining the PFD analysis information, the AF determines whether there is a need to create/update/delete the PFD information corresponding to the Application ID; and if yes, the AF sends a request to the NEF (PFDF), to request creation/update/deletion of the PFD information.

Here, the AF may invoke Nnef_PFDManagement_Create/Update/Delete to request the NEF (PFDF) for creation/update/deletion of the PFD information, that is, the AF sends a Nnef_PFDManagement_Create/Update/Delete Request to the NEF (PFDF).

At 512 to 513, the NEF (PFDF) requests the UDR to create/update/delete the PFD information. After performing the corresponding processing, the UDR returns a corresponding response to the NEF (PFDF).

Here, the NEF (PFDF) invokes Nudr_DM_Create/Update/Delete from the UDR and sends the Nudr_DM_Create/Update/Delete Request to the UDR to request to create/update/delete the PFD information, the request carrying the Application ID and the corresponding PFD information (correspondingto the first PFD information in the previous embodiment). The UDR creates/updates/deletes the corresponding PFD information and sends a Nudr_DM_Create/Update/Delete Response to the NEF.

At 514: the NEF (PFDF) returns a response to the AF.

Here, the NEF (PFDF) sends a Nnef_PFDManagement_Create/Update/Delete Response to the AF.

Compared with Example I, in this example, the AF and the NWDAF interact with each other directly to obtain updated PFD information (Observed PFD Info).

Example I may be a scenario where the AF does not belong to the operator, and Example II may be a scenario where the AF belongs to the operator.

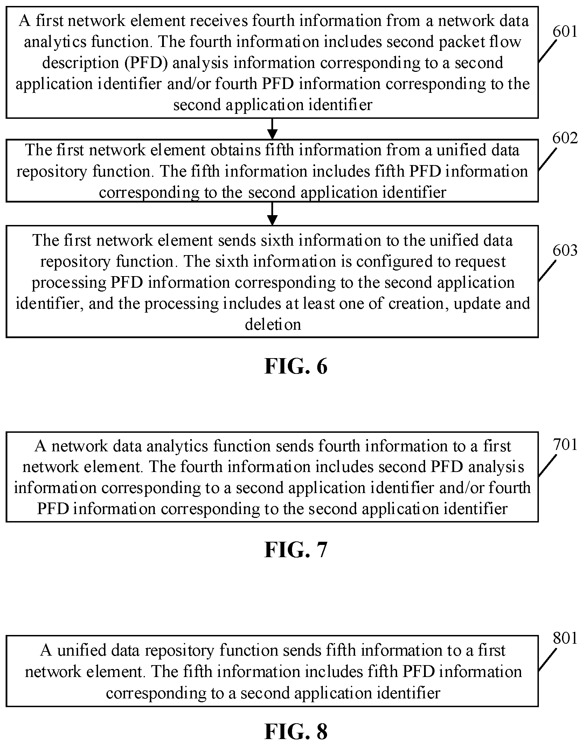

Embodiments of the disclosure further provide a method for communication. FIG. 6 illustrates a fourth schematic flowchart of a method for communication according to embodiments of the disclosure. As illustrated in FIG. 6, the method includes following operations.

At 601, a first network element receives fourth information from a network data analytics function. The fourth information includes second packet flow description (PFD) analysis information corresponding to a second application identifier and/or fourth PFD information corresponding to the second application identifier.

At 602, the first network element obtains fifth information from a unified data repository function. The fifth information includes fifth PFD information corresponding to the second application identifier.

At 603, the first network element sends sixth information to the unified data repository function. The sixth information is configured to request processing PFD information corresponding to the second application identifier, and the processing includes at least one of creation, update and deletion.

In this embodiment, the first network element at least includes: a network exposure function and/or a packet flow description function. In other embodiments, for example in a 5G system, the first network element may also be denoted as a NEF (PFDF).

Optionally, the second PFD analysis information includes the fourth PFD information.

In this embodiment, the first network element receives the fourth information from the network data analytics function on the one hand, and obtains the fifth information from the unified data repository function on the other hand, and the first network element uniformly determines the PFD information to be sent to the unified data repository function, thereby solving the problem that PFD information output by the network data analytics function to the NEF is duplicated with PFD information sent by the AF to the NEF.

In some optional embodiments, the sixth information includes the PFD information to be processed and/or the second application identifier.

In some examples, the PFD information to be processed may be the fourth PFD information. In some other examples, the PFD information to be processed may also be PFD information to be processed, which is determined by the first network element. For example, new PFD information in the fourth PFD information compared to the fifth PFD information is the PFD information that needs to be processed (at least one of creation, update, and deletion). In such an example, the PFD information to be processed may be at least partial information in the fourth PFD information.

In some optional embodiments of the disclosure, the fifth PFD information includes at least one piece of PFD information, and each piece of PFD information in the fifth PFD information includes a first identifier indicating whether the PFD information is from a network data analytics function or an application function (AF). In some optional embodiments, a priority of PFD information from the AF is higher than a priority of PFD information from the network data analytics function.

In some optional embodiments of the disclosure, the operation that the first network element sends the sixth information to the unified data repository function includes: the first network element compares the fourth PFD information with the fifth PFD information, and sends the sixth information to the unified data repository function.

In some optional embodiments, the operation that the first network element compares the fourth PFD information with the fifth PFD information and sends the sixth information to the unified data repository function includes following. The first network element compares the fourth PFD information with the fifth PFD information. The first network element sends the sixth information to the unified data repository function in a case that the fourth PFD information is not duplicated with the fifth PFD information, the sixth information being configured to request creating PFD information corresponding to the second application identifier; and/or the first network element sends the sixth information to the unified data repository function, in a case that the fourth PFD information is duplicated with the fifth PFD information and the first identifier of PFD information duplicated with the fourth PFD information in the fifth PFD information indicates that the PFD information is from the network data analytics function, the sixth information being configured to request updating and/or deleting PFD information corresponding to the second application identifier.

In this embodiment, PFD information from the AF has a higher priority than PFD information from the network data analytics function. Since the fourth PFD information is from the network data analytics function, and the fifth PFD information may be from the AF or may be from the network data analytics function, in the process of comparing the fourth PFD information with the fifth PFD information, in a case that the fifth PFD information indicates itself being from the AF, no PFD information is processed because the PFD information from the AF has a higher priority than the PFD information from the network data analytics function, namely no sixth information is sent. In a case that the fifth PFD information indicates itself being from the network data analytics function, the PFD information is processed, that is, the sixth information is sent.

In some optional embodiments of the disclosure, the method further includes that the first network element sends seventh information to the network data analytics function. The seventh information is configured to subscribe PFD analysis information and/or PFD information, and the seventh information includes the second application identifier.

In this embodiment, the first network element sends seventh information to the network data analytics function. The seventh information is configured to subscribe PFD analysis information and/or PFD information. Based on the subscription, the network data analytics function sends the fourth information to the first network element.

In some optional embodiments, the method further includes following. The first network element receives second subscription information from the network data analytics function. The second subscription information is configured to subscribe PFD information corresponding to the second application identifier. The first network element queries the unified data repository function to obtain sixth PFD information corresponding to the second application identifier, and sends the sixth PFD information to the network data analytics function.

In some optional embodiments of the disclosure, the fourth PFD information includes a PFD information overall set, the PFD information overall set includes all PFD information ever provided by the network data analytics function, and all the PFD information includes PFD information to be processed; or the fourth PFD information includes a PFD information subset which consists of the PFD information to be processed.

In this embodiment, as an example, the fourth PFD information includes all PFD information ever provided by the network data analytics function. In such an example, the fourth PFD information includes a PFD information overall set, which may also be referred to as a PFD overall set, total PFD, total information, or total PFD information, that is, the fourth PFD information includes all PFD information ever generated by the network data analytics function (for example including currently existing or obtained PFD information, and new PFD information which may refer to PFD information that needs to be processed (at least one of creation, update, and deletion)). For example, the NWDAF generates PFD information 1, PFD information 2, PFD information 3, and PFD information 4, and the PFD information 4 is the PFD information to be processed. In such a case, the PFD information overall set includes the above four pieces of PFD information. As another example, the fourth PFD information includes only PFD information that needs to be processed. In such an example, a PFD information subset included in the fourth PFD information may be referred to as a PFD subset or subset information. In this case, the PFD information subset may merely include PFD information 4.

In some optional embodiments of the disclosure, the fourth PFD information includes at least one piece of PFD information, and at least a portion of the at least one piece of PFD information includes a second identifier indicating whether the corresponding PFD information is valid or invalid.

In this embodiment, at least a portion of PFD information in the fourth PFD information includes a second identifier indicating whether the corresponding PFD information is valid or invalid. If the second identifier indicates that the corresponding PFD information is invalid, it indicates that the corresponding PFD information needs to be aged, and the first network element does not process the PFD information indicated as invalid. For example, in the process of comparing the fourth PFD information with the fifth PFD information, the PFD information indicated as invalid is deleted.

Based on the above embodiment, embodiments of the disclosure further provide a method for communication. FIG. 7 illustrates a fifth schematic flowchart of a method for communication according to embodiments of the disclosure. As illustrated in FIG. 7, the method includes following operations.

At 701, a network data analytics function sends fourth information to a first network element. The fourth information includes second PFD analysis information corresponding to a second application identifier and/or fourth PFD information corresponding to the second application identifier. The fourth information is used for the first network element to determine or decide to request processing PFD information corresponding to the second application identifier, and the processing includes at least one of creation, update and deletion.

In this embodiment, the first network element at least includes: a network exposure function and/or a packet flow description function. In other embodiments, for example in a 5G system, the first network element may also be denoted as a NEF (PFDF).

In some optional embodiments, the second PFD analysis information includes the fourth PFD information.

In some optional embodiments of the disclosure, the method further includes that the network data analytics function receives seventh information from the first network element. The seventh information is configured to subscribe PFD analysis information and/or PFD information, and the seventh information includes the second application identifier.

In this embodiment, the first network element sends seventh information to the network data analytics function. The seventh information is configured to subscribe PFD analysis information and/or PFD information. Based on the subscription, the network data analytics function sends the fourth information to the first network element.

In some optional embodiments of the disclosure, the method further includes that the network data analytics function obtains third user plane information from a user plane function.

In this embodiment, the network data analytics function may obtain second user plane information corresponding to the second application identifier from the user plane function. Optionally, the second user plane information may specifically be a service message. Exemplarily, the user plane function (UPF) may be a UPF in a 5G system, or may be other network elements having a capability of processing and/or transmitting user plane data in a 6G system and subsequent systems, which is not specifically limited herein.

In some optional embodiments of the disclosure, the method further includes that the network data analytics function obtains the second PFD analysis information corresponding to the second application identifier and/or the fourth PFD information corresponding to the second application identifier.

In this embodiment, the network data analytics function obtains the second PFD analysis information corresponding to the second application identifier and/or the fourth PFD information corresponding to the second application identifier by deduction using a pre-trained model. In some examples, the network data analytics function may obtain the second PFD analysis information corresponding to the second application identifier and/or the fourth PFD information corresponding to the second application identifier by deduction based on the second user plane information and a pre-trained model.

In some optional embodiments, the method further includes that: the network data analytics function obtains sixth PFD information from a unified data repository function through a first network element; and/or the network data analytics function obtains seventh PFD information and/or fourth user plane information from an analytics data repository function. The seventh PFD information and/or the seventh user plane information is information within a second historical time range.

In various embodiments of the disclosure, the unified data repository function may specifically be a network element having a data repository capability, or may be referred to as a fourth network element in other embodiments. Exemplarily, the unified data repository (UDR) function may be a UDR network element in a 5G system, or may be other network elements having a data repository capability in a 6G system and subsequent systems, which is not specifically limited herein. The analytics data repository function may specifically be a network element having a capability of collecting historical data and/or storing analytics data, or may be referred to as a fifth network element in other embodiments. Exemplarily, the analytics data repository function (ADRF) may be an ADRF network element in a 5G system, or may be other network elements having a capability of collecting historical data and/or storing analytics data in a 6G system and subsequent systems, which is not specifically limited herein.

In this embodiment, the network data analytics function may obtain sixth PFD information from a unified data repository function through a first network element, and/or obtain seventh PFD information and/or fourth user plane information from an analytics data repository function within a historical time range, and train the model based on the seventh PFD information and/or the fourth user plane information, or based on at least one of the sixth PFD information, the fourth user plane information and the seventh PFD information. Exemplarily, the network data analytics function may subscribe PFD information from the NEF, and the NEF queries the unified data repository function to obtain the sixth PFD information and then transmits the sixth PFD information to the network data analytics function. Exemplarily, the network data analytics function may send request information to the analytics data repository function, and the request information is configured to request collecting third PFD information and/or second user plane information within a historical time range. The request information may include a historical time period or a time window. Optionally, the request information may further include an Application ID.

In this embodiment, the network data analytics function may train a model using the information obtained above, and further obtain the second PFD analysis information and/or the fourth PFD information according to the model.

In some optional embodiments of the disclosure, the fourth PFD information includes a PFD information overall set, the PFD information overall set includes all PFD information ever provided by the network data analytics function, and all the PFD information includes PFD information to be processed; or the fourth PFD information includes a PFD information subset which consists of the PFD information to be processed.

In this embodiment, as an example, the fourth PFD information includes all PFD information ever provided by the network data analytics function. In such an example, the fourth PFD information includes a PFD information overall set, which may also be referred to as a PFD overall set, total PFD, total information, or total PFD information, that is, the fourth PFD information includes all PFD information ever generated by the network data analytics function (for example including currently existing or obtained PFD information, and new PFD information which may refer to PFD information that needs to be processed (at least one of creation, update, and deletion)). For example, the NWDAF generates PFD information 1, PFD information 2, PFD information 3, and PFD information 4, and the PFD information 4 is the PFD information to be processed. In such a case, the PFD information overall set includes the above four pieces of PFD information. As another example, the fourth PFD information includes only PFD information that needs to be processed. In such an example, a PFD information subset included in the fourth PFD information may be referred to as a PFD subset or subset information. In this case, the PFD information subset may merely include PFD information 4.

In some optional embodiments, the fourth PFD information includes at least one piece of PFD information, and at least a portion of the at least one piece of PFD information includes a second identifier indicating whether the PFD information is valid or invalid.

In this embodiment, at least a portion of PFD information in the fourth PFD information includes a second identifier indicating the corresponding PFD information is valid or invalid. If the second identifier indicates the corresponding PFD information is invalid, it indicates that the corresponding PFD information needs to be aged, and the first network element does not process the PFD information indicated as invalid. For example, in the process of comparing the fourth PFD information with the fifth PFD information, the PFD information indicated invalid is deleted.

Based on the above embodiment, embodiments of the disclosure further provide a method for communication. FIG. 8 illustrates a sixth schematic flowchart of a method for communication according to embodiments of the disclosure. As illustrated in FIG. 8, the method includes following operations.

At 801, a unified data repository function sends fifth information to a first network element. The fifth information includes fifth PFD information corresponding to a second application identifier. The fifth information is used for the first network element to determine or decide to request processing PFD information corresponding to the second application identifier. The processing includes at least one of creation, update and deletion.

In this embodiment, the first network element at least includes: a network exposure function and/or a packet flow description function. In other embodiments, for example in a 5G system, the first network element may also be denoted as a NEF (PFDF).

In some optional embodiments of the disclosure, the fifth PFD information includes at least one piece of PFD information, and each piece of PFD information in the fifth PFD information includes a first identifier indicating whether the PFD information is from a network data analytics function or an application function (AF).

In some optional embodiments, a priority of PFD information from the AF is higher than a priority of PFD information from the network data analytics function.

In some optional embodiments of the disclosure, the method further includes that the unified data repository function receives sixth information from the first network element. The sixth information is configured to request processing PFD information corresponding to the second application identifier, and the processing includes at least one of creation, update and deletion.

In some optional embodiments, the sixth information includes the PFD information to be processed and/or the second application identifier.

The method for communication according to the embodiments of the disclosure is described in detail hereinafter in conjunction with particular examples. In following examples, description is made with the first network element being a network exposure function (NEF) (PFDF), a network data analytics function being NWDAF, a user plane function being UPF, a unified data repository function being UDR, and an analytic data repository function specifically being an ADRF as an example.

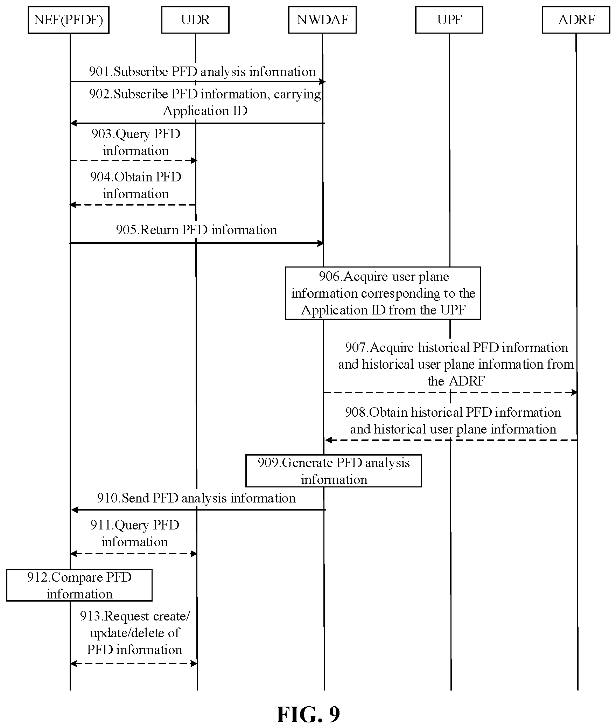

FIG. 9 illustrates a third schematic diagram of an interaction procedure of a method for communication according to embodiments of the disclosure. As illustrated in FIG. 9, the method includes following operations.

At 901, an NEF (PFDF) subscribes PFD analysis information from an NWDAF, the subscription carrying an application identifier (Application ID).

The PFDF is provided within the NEF.

Here, exemplarily, the NEF (PFDF) invokes Nnwdaf_AnalyticsSubscription_Subscribe to subscribe the PFD analysis information from the NWDAF, the subscription carrying at least the application ID.

At 902 to 905, the NWDAF subscribes PFD information in use from the NEF (PFDF), the subscription carrying at least the Application ID; the NEF (PFDF) invokes Nudr_DM_Query to query a UDR for the PFD information in use, the query carrying the Application ID; and the NEF obtains the PFD information and returns the same to the NWDAF.

Here, the NWDAF may invoke Nnef_EventExposure_Subscribe to subscribe the PFD in use from the NEF (PFDF), the subscription carrying at least the Application ID. The NEF invokes Nudr_DM_Query to query the UDR for the PFD information, the query carrying the Application ID. The NEF (PFDF) obtains the queried PFD information through a response corresponding to the Nudr_DM_Query, and returns the PFD information to the NWDAF through the Nnef_EventExposure _Notify. The PFD information herein corresponds to the sixth PFD information in the previous embodiment.

At 906, the NWDAF acquires user plane information corresponding to the Application ID from the UPF.

The user plane information herein corresponds to the third user plane information in the previous embodiment.

At 907 to 908, the NWDAF acquires historical PFD information and historical user plane information from an ADRF, by carrying the Application ID and also a historical time period or a time window.

Here, the NWDAF requests, through Nadrf_DataManagement_RetrievalRequest, the ADRF for acquiring the historical PFD information and the historical user plane information. The request carries the Application ID, and also the historical time period or the time window. The NWDAF receives, through Nadrf_DataManagement _RetrievalResponse, the historical PFD information and the historical user plane information returned by the ADRF.

The historical PFD information corresponds to the seventh PFD information in the previous embodiment, and the historical user plane information corresponds to the fourth user plane information in the previous embodiment.

At 909, the NWDAF generates PFD analysis information.

Exemplarily, the NWDAF may obtain the PFD analysis information through inference or deduction. The PFD analysis information herein corresponds to the second PFD analysis information in the previous embodiment. The PFD information contained in the PFD analysis information corresponds to the fourth PFD information in the previous embodiment.

At 910, the NWDAF sends the PFD analysis information corresponding to the Application ID to the NEF (PFDF), and the PFD analysis information includes PFD information (fourth PFD information).

Here, the NWDAF may send the PFD analysis information to the NEF (PFDF) through Nnwdaf_AnalyticsSubscription_Notify.

The PFD information generated by the NWDAF and sent by the NWDAF to the NEF (PFDF) may refer to a PFD overall set or a PFD subset. The PFD overall set refers to that the NWDAF generates all PFD information corresponding to the Application ID. The PFD subset refers to that the NWDAF generates only a portion of PFD information that needs to be updated (such as a portion of PFD information that needs to be created, deleted, or updated) for the Application ID.

Optionally, at least a portion of the PFD information (fourth PFD information) further includes a second identifier indicating whether the PFD information is valid or invalid; and if the second identifier indicates the corresponding PFD information is invalid, it indicates that the corresponding PFD information needs to be aged.

At 911, the NEF (PFDF) invokes Nudr_DM_Query to query the UDR for PFD information, the query carrying the Application ID.

The PFD information obtained by the NEF (PFDF) through querying the UDR herein may correspond to the fifth PFD information in the previous embodiment.

Optionally, a new field or identifier (corresponding to the first identifier in the previous embodiment) is maintained in the UDR. The new field or identifier indicates that corresponding PFD information is from the NWDAF or AF. A priority of PFD information from the AF is higher than a priority of PFD information from the NWDAF.

At 912: the NEF (PFDF) compares the PFD information from the NWDAF with the PFD information queried from the UDR.

In some examples, the comparison is conducted as follows:
If the PFD information from the NWDAF is not duplicated with the PFD information returned from the UDR, the PFD needs to be created. If the PFD information from the NWDAF is duplicated with the PFD information returned from the UDR, in a case that the PFD information originates from AF based on the new field or identifier (which indicates whether the PDF information originates from the NWDAF or the AF), then the PFD information provided by the AF is maintained since the AF has a higher priority; in a case that the PFD information originates from NWDAF based on the new field or identifier, the PFD information needs to be updated and/or deleted.

Optionally, if at least a portion of the PFD information (fourth PFD information) includes a second identifier indicating that the corresponding PFD information is invalid, the corresponding PFD information needs to be aged. There is no need to conduct the comparison for PFD information that needs to be aged, namely PFD information indicated as invalid needs to be deleted. Correspondingly, comparison is conducted as described above only for PFD information indicated as valid.

At 913, the NEF (PFDF) requests the UDR to create/update/delete the PFD information. After performing the corresponding processing, the UDR returns a corresponding response to the NEF (PFDF).

Here, the NEF (PFDF) invokes Nudr_DM_Create/Update/Delete from the UDR to request the UDR to create/update/delete the PFD information, the request carrying the Application ID. The UDR creates/updates/deletes the PFD information and sends a Nudr_DM_Create/Update/Delete response to the NEF.

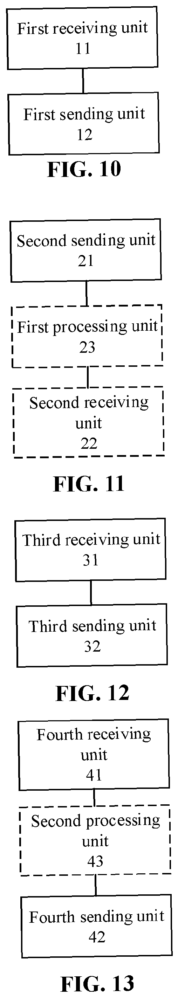

Based on the above embodiments, embodiments of the disclosure further provide an apparatus for communication. The apparatus is applied to an application function (AF) or a network function (NF). FIG. 10 illustrates a first schematic structural diagram of composition of an apparatus for communication according to embodiments of the disclosure. As illustrated in FIG. 10, the apparatus includes a first receiving unit 11 and a first sending unit 12.

The first receiving unit 11 is configured to receive first information from a network data analytics function. The first information includes first packet flow description (PFD) analysis information corresponding to a first application identifier and/or first PFD information corresponding to the first application identifier.

The first sending unit 12 is configured to send second information to a first network element. The second information is configured to request processing PFD information corresponding to the first application identifier, and the processing includes at least one of creation, update and deletion.

In some optional embodiments of the disclosure, the second information includes the PFD information to be processed and/or the first application identifier.

In some optional embodiments of the disclosure, the first PFD analysis information includes the first PFD information.

In some optional embodiments of the disclosure, the first receiving unit 11 is configured to receive the first information from the network data analytics function through the first network element, or to receive the first information from the network data analytics function directly.

In some optional embodiments of the disclosure, the first sending unit 12 is further configured to send third information to the network data analytics function. The third information is configured to subscribe PFD analysis information and/or PFD information, and the third information includes the first application identifier.

In some optional embodiments of the disclosure, the first sending unit 12 is configured to send the third information to the network data analytics function through the first network element, or to send the third information to the network data analytics function directly.

In some optional embodiments of the disclosure, the first network element includes: a network exposure function and/or a packet flow description function.

In the embodiments of the disclosure, the first receiving unit 11 and the first sending unit 12 in the apparatus may be realized by a communication module (containing such as a basic communication suite, an operating system, a communication module, an standardized interface and protocols) and a transceiving antenna in practical applications.

Embodiments of the disclosure further provide an apparatus for communication. The apparatus is applied to a network data analytics function. FIG. 11 illustrates a second schematic structural diagram of composition of an apparatus for communication according to embodiments of the disclosure. As illustrated in FIG. 11, the apparatus includes a second sending unit 21 configured to send first information to an application function (AF) or a network function (NF). The first information includes first packet flow description (PFD) analysis information corresponding to a first application identifier and/or first PFD information corresponding to the first application identifier.

In some optional embodiments of the disclosure, the second sending unit 21 is configured to send the first information to the AF or the NF through a first network element, or to send the first information to the AF or the NF directly.

In some optional embodiments of the disclosure, the first PFD analysis information includes the first PFD information.

In some optional embodiments of the disclosure, the apparatus further includes a second receiving unit 22. The second receiving unit 22 is configured to receive third information from the AF or the NF. The third information is configured to subscribe PFD analysis information and/or PFD information, and the third information includes the first application identifier.

In some optional embodiments of the disclosure, the second receiving unit 22 is configured to receive the third information from the AF or the NF through a first network element, or to receive the third information from the AF or the NF directly.

In some optional embodiments of the disclosure, the apparatus further includes a first processing unit 23, configured to obtain the first PFD analysis information corresponding to the first application identifier and/or the first PFD information corresponding to the first application identifier.

In some optional embodiments of the disclosure, the apparatus further includes a second receiving unit 22, configured to obtain first user plane information from a user plane function.

In some optional embodiments of the disclosure, the apparatus further includes a second receiving unit 22. The second receiving unit 22 is configured to obtain second PFD information from a unified data repository function through a first network element; and/or the second receiving unit 22 is configured to obtain third PFD information and/or second user plane information from an analytics data repository function. The third PFD information and/or the second user plane information is information within a first historical time range.

In some optional embodiments of the disclosure, the first network element includes: a network exposure function and/or a packet flow description function.

In the embodiments of the disclosure, the first processing unit 23 in the apparatus may be realized by a central processing unit (CPU), a digital signal processor (DSP), a microcontroller unit (MCU) or a field programmable gate array (FPGA) in practical applications. The second receiving unit 22 and the second sending unit 21 in the apparatus may be realized by a communication module (containing such as a basic communication suite, an operating system, a communication module, an standardized interface and protocols) and a transceiving antenna in practical applications.

Embodiments of the disclosure further provide an apparatus for communication. The apparatus is applied to a first network element. FIG. 12 illustrates a third schematic structural diagram of composition of an apparatus for communication according to embodiments of the disclosure. As illustrated in FIG. 12, the apparatus includes a third receiving unit 31 and a third sending unit 32.

The third receiving unit 31 is configured to receive second information from an application function (AF) or a network function (NF). The second information is configured to request processing PFD information corresponding to a first application identifier.

The third sending unit 32 is configured to send third information to a unified data repository function. The third information is configured to request processing PFD information corresponding to the first application identifier in the unified data repository function, and the processing includes at least one of creation, update and deletion.

In some optional embodiments of the disclosure, the second information and the third information includes the PFD information to be processed and/or the first application identifier.

In some optional embodiments of the disclosure, the third receiving unit 31 is further configured to receive first information from a network data analytics function.

The third sending unit 32 is further configured to send the first information to the AF or the NF. The first information includes first PFD analysis information corresponding to the first application identifier and/or first PFD information corresponding to the first application identifier.

In some optional embodiments of the disclosure, the first PFD analysis information includes the first PFD information.

In some optional embodiments of the disclosure, the third receiving unit 31 is further configured to receive third information from the AF or the NF.

The third sending unit 32 is further configured to send the third information to a network data analytics function. The third information is configured to subscribe PFD analysis information and/or PFD information, and the third information includes the first application identifier.

In some optional embodiments of the disclosure, the third receiving unit 31 is further configured to receive first subscription information from a network data analytics function. The first subscription information is configured to subscribe PFD information corresponding to the first application identifier. The third receiving unit 31 is further configured to query, through the third sending unit 32, the unified data repository function to obtain second PFD information corresponding to the first application identifier.

The third sending unit 32 is further configured to send the second PFD information to the network data analytics function.

In some optional embodiments of the disclosure, the first network element includes: a network exposure function and/or a packet flow description function.

In the embodiments of the disclosure, the third receiving unit 31 and the third sending unit 32 in the apparatus may be realized by a communication module (containing such as a basic communication suite, an operating system, a communication module, an standardized interface and protocols) and a transceiving antenna in practical applications.

Embodiments of the disclosure further provide an apparatus for communication. The apparatus is applied to a first network element. FIG. 13 illustrates a fourth schematic structural diagram of composition of an apparatus for communication according to embodiments of the disclosure. As illustrated in FIG. 13, the apparatus includes a fourth receiving unit 41 and a fourth sending unit 42.

The fourth receiving unit 41 is configured to receive fourth information from a network data analytics function. The fourth information includes second packet flow description (PFD) analysis information corresponding to a second application identifier and/or fourth PFD information corresponding to the second application identifier. The fourth receiving unit is further configured to obtain fifth information from a unified data repository function. The fifth information includes fifth PFD information corresponding to the second application identifier.

The fourth sending unit 42 is configured to send sixth information to the unified data repository function. The sixth information is configured to request processing PFD information corresponding to the second application identifier, and the processing includes at least one of creation, update and deletion.

In some optional embodiments of the disclosure, the sixth information includes the PFD information to be processed and/or the second application identifier.

In some optional embodiments of the disclosure, the second PFD analysis information includes the fourth PFD information.

In some optional embodiments of the disclosure, the fifth PFD information includes at least one piece of PFD information, and each piece of PFD information in the fifth PFD information includes a first identifier indicating whether the PFD information is from a network data analytics function or an application function (AF).

In some optional embodiments of the disclosure, a priority of PFD information from the network data analytics function (NWDAF) is higher than a priority of PFD information from the network data analytics function (NWDAF).

In some optional embodiments of the disclosure, the apparatus further includes a second processing unit 43 configured to compare the fourth PFD information with the fifth PFD information.

The fourth sending unit 42 is configured to send the sixth information to the unified data repository function.

In some optional embodiments of the disclosure, the fourth sending unit 42 is configured to send the sixth information to the unified data repository function in a case that the fourth PFD information is not duplicated with the fifth PFD information, the sixth information being configured to request creating PFD information corresponding to the second application identifier; and/or the fourth sending unit 42 is configured to send the sixth information to the unified data repository function in a case that the fourth PFD information is duplicated with the fifth PFD information and the first identifier of PFD information duplicated with the fourth PFD information in the fifth PFD information indicates that the PFD information is from the network data analytics function, the sixth information being configured to request updating and/or deleting PFD information corresponding to the second application identifier.

In some optional embodiments of the disclosure, the fourth sending unit 42 is further configured to send seventh information to the network data analytics function. The seventh information is configured to subscribe PFD analysis information and/or PFD information, and the sixth information includes the second application identifier.

In some optional embodiments of the disclosure, the fourth receiving unit 41 is further configured to receive second subscription information from the network data analytics function. The second subscription information is configured to subscribe PFD information corresponding to the second application identifier. The fourth receiving unit 41 is further configured to query, through the fourth sending unit 42, the unified data repository function to obtain sixth PFD information corresponding to the second application identifier.

The fourth sending unit 42 is further configured to send the sixth PFD information to the network data analytics function.

In some optional embodiments of the disclosure, the fourth PFD information includes a PFD information overall set, the PFD information overall set includes all PFD information ever provided by the network data analytics function, and all the PFD information includes PFD information to be processed; or the fourth PFD information includes a PFD information subset which consists of the PFD information to be processed.

In some optional embodiments of the disclosure, the fourth PFD information includes at least one piece of PFD information, and each of at least a portion of the at least one piece of PFD information includes a second identifier indicating whether the PFD information is valid or invalid.

In some optional embodiments of the disclosure, the first network element includes: a network exposure function and/or a packet flow description function.

In the embodiments of the disclosure, the second processing unit 43 in the apparatus may be realized by a CPU, a DSP, an MCU or an FPGA in practical applications. The fourth receiving unit 41 and the fourth sending unit 42 in the apparatus may be realized by a communication module (containing such as a basic communication suite, an operating system, a communication module, an standardized interface and protocols) and a transceiving antenna in practical applications.

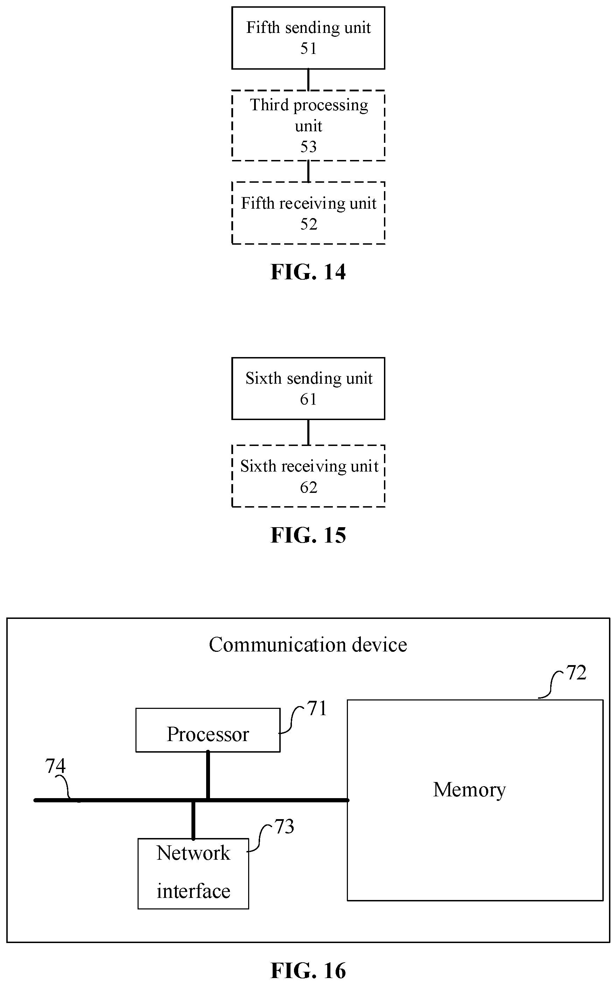

Embodiments of the disclosure further provide an apparatus for communication. The apparatus is applied to a network data analytics function. FIG. 14 illustrates a fifth schematic structural diagram of composition of an apparatus for communication according to embodiments of the disclosure. As illustrated in FIG. 14, the apparatus includes a fifth sending unit 51 configured to send fourth information to a first network element. The fourth information includes second PFD analysis information corresponding to a second application identifier and/or fourth PFD information corresponding to the second application identifier. The fourth information is used for the first network element to determine or decide to request processing PFD information corresponding to the second application identifier, and the processing includes at least one of creation, update and deletion.

In some optional embodiments of the disclosure, the second PFD analysis information includes the fourth PFD information.

In some optional embodiments of the disclosure, the apparatus further includes a fifth receiving unit 52 configured to receive seventh information from the first network element. The seventh information is configured to subscribe PFD analysis information and/or PFD information, and the seventh information includes the second application identifier.

In some optional embodiments of the disclosure, the apparatus further includes a third processing unit 53 configured to obtain the second PFD analysis information corresponding to the second application identifier and/or the fourth PFD information corresponding to the second application identifier.

In some optional embodiments of the disclosure, the apparatus further includes a fifth receiving unit 52, configured to obtain third user plane information from a user plane function.

In some optional embodiments of the disclosure, the apparatus further includes a fifth receiving unit 52 configured to obtain sixth PFD information from a unified data repository function through a first network element; and/or obtain seventh PFD information and/or fourth user plane information from an analytics data repository function. The seventh PFD information and/or the seventh user plane information is information within a second historical time range.

In some optional embodiments of the disclosure, the fourth PFD information includes a PFD information overall set, the PFD information overall set includes all PFD information ever provided by the network data analytics function, and all the PFD information includes PFD information to be processed; or the fourth PFD information includes a PFD information subset which consists of the PFD information to be processed.

In some optional embodiments of the disclosure, the fourth PFD information includes at least one piece of PFD information, and each of at least a portion of the at least one piece of PFD information includes a second identifier indicating whether the PFD information is valid or invalid.

In some optional embodiments of the disclosure, the first network element includes: a network exposure function and/or a packet flow description function.

In the embodiments of the disclosure, the third processing unit 53 in the apparatus may be realized by a CPU, a DSP, an MCU or an FPGA in practical applications. The fifth receiving unit 52 and the fifth sending unit 51 in the apparatus may be realized by a communication module (containing such as a basic communication suite, an operating system, a communication module, an standardized interface and protocols) and a transceiving antenna in practical applications.

Embodiments of the disclosure further provide an apparatus for communication. The apparatus is applied to a unified data repository function. FIG. 15 illustrates a sixth schematic structural diagram of composition of an apparatus for communication according to embodiments of the disclosure. As illustrated in FIG. 15, the apparatus includes a sixth sending unit 61 configured to send fifth information to a first network element. The fifth information includes fifth PFD information corresponding to a second application identifier. The fifth information is used for the first network element to determine or decide to request processing PFD information corresponding to the second application identifier. The processing includes at least one of creation, update and deletion.

In some optional embodiments of the disclosure, the fifth PFD information includes at least one piece of PFD information, and each piece of PFD information in the fifth PFD information includes a first identifier indicating whether the PFD information is from a network data analytics function or an application function (AF).

In some optional embodiments of the disclosure, a priority of PFD information from the network data analytics function (NWDAF) is higher than a priority of PFD information from the network data analytics function (NWDAF).

In some optional embodiments of the disclosure, the apparatus further includes a sixth receiving unit 62 configured to receive sixth information from the first network element. The sixth information is configured to request processing PFD information corresponding to the second application identifier, and the processing includes at least one of creation, update and deletion.

In some optional embodiments of the disclosure, the sixth information includes the PFD information to be processed and/or the second application identifier.

In some optional embodiments of the disclosure, the first network element includes: a network exposure function and/or a packet flow description function.

In the embodiments of the disclosure, the sixth receiving unit 62 and the sixth sending unit 61 in the apparatus may be realized by a communication module (containing such as a basic communication suite, an operating system, a communication module, an standardized interface and protocols) and a transceiving antenna in practical applications.

It is to be noted that for the above apparatus for communication according to the embodiments, the division of the program modules above is used as an example for description of the communication only. In practical applications, the processing may be allocated to and accomplished by different program modules according to demands. Namely, the inner structure of the apparatus may be divided into different program modules to accomplish all or part of the processing described above. Additionally, the above apparatus for communication according to the embodiments belong to the same concept as the method for communication, and details of the particular implementation process of the apparatus may refer to the method embodiments, which will not be described here again.

Based on the above embodiments, embodiments of the disclosure further provide a communication device, and the communication device may be specifically an AF or an NF, a network data analytics function, a first network element, a unified data repository function, or the like in the above embodiments. FIG. 16 illustrates a schematic structural diagram of hardware composition of a communication device according to embodiments of the disclosure. As illustrated in FIG. 16, the communication device includes a memory 72, a processor 71, and a computer program that is stored in the memory 72 and is capable of being run on the processor 71. The processor 71 executes the computer program to implement the steps of the method for communication applied to the application function (AF) in the embodiments of the disclosure. Alternatively, the processor 71 executes the computer program to implement the steps of the method for communication applied to the network data analytics function in the embodiments of the disclosure. Alternatively, the processor 71 executes the computer program to implement the steps of the method for communication applied to the first network element in the embodiments of the disclosure. Alternatively, the processor 71 executes the computer program to implement the steps of the method for communication applied to the unified data repository function in the embodiments of the disclosure.

Optionally, the communication device further includes at least one network interface 73. The components in the communication device are coupled together through a bus system 74. It may be understood that the bus system 74 is used for realizing the connection and communication between the components. Besides a data bus, the bus system 74 further includes a power bus, a control bus and a state signal bus. However, for clarity of description, the buses are all signed as the bus system 74 in FIG. 16.

It may be understood that the memory 72 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 72 described in the embodiments of the disclosure is intended to include but not limited to memories of these and any other suitable types.

The method disclosed in above embodiments of the disclosure may be applied to the processor 71, or may be implemented by the processor 71. The processor 71 may be an integrated circuit chip, and has the capability of signal processing. During implementation, the various steps of in the above method may be completed by an integrated logic circuit in hardware form or instructions in software form in the processor 71. The above processor 71 may be a general-purpose processor, a digital signal processor (DSP), or other programmable logic devices, discrete gates or transistor logic devices, discrete hardware components and so on. The processor 71 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is in the memory 72, and the processor 71 reads information from the memory 72 to implement steps of the above methods in combination with the hardware.

In an exemplary embodiment, the communication device may be implemented by one or more Application Specific Integrated Circuit (ASICs), DSPs, Programmable Logic Devices (PLDs), Complex Programmable Logic Devices (CPLDs), FPGAs, general-purpose processors, controllers, MCUs, Microprocessors, or other electronic elements, to execute the method above.

In an exemplary embodiment, embodiments of the disclosure further provide a computer-readable storage medium, for example the memory 72 including a computer program. The computer program may be executed by the processor 71 of the communication device, to accomplish the steps of the above method. The computer-readable storage medium may be such as a ferroelectroc random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM), or may be a device containing one or a combination of those memories.

Embodiments of the disclosure further provide a computer-readable storage having stored thereon a computer program. The computer program, when executed by a processor, causes the processor to implement steps of the method for communication applied to an application function (AF) or a network function (NF) according to the embodiments of the disclosure. Alternatively, the computer program, when executed by a processor, causes the processor to implement steps of the method for communication applied to a network data analytics function according to the embodiments of the disclosure. Alternatively, the computer program, when executed by a processor, causes the processor to implement steps of the method for communication applied to a first network element according to the embodiments of the disclosure. Alternatively, the computer program, when executed by a processor, causes the processor to implement steps of the method for communication applied to a unified data repository function according to the embodiments of the disclosure.

The methods disclosed in the method embodiments according to the disclosure may be arbitrarily without conflict, to obtain a new method embodiment.

The features disclosed in the product embodiments according to the disclosure may be arbitrarily without conflict, to obtain a new product embodiment.

The features disclosed in the method embodiments or device embodiments according to the disclosure may be arbitrarily without conflict, to obtain a new method embodiment or a new device embodiment.

In some embodiments provided in the disclosure, it is to be understood that the disclosed device and method may be implemented in other ways. The device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or may exist separately physically; or two or more units may be integrated in one unit. The integrated unit may be implemented in form of hardware, or may be implemented in form of hardware plus software functions.

Those of ordinary skill in the art may understand that all or some steps of the above method embodiment may be accomplished by hardware related to program instructions. The program described above may be stored in a computer-readable storage medium, and the program, when executed, implements the steps of the method embodiments. The foregoing storage medium includes various media capable of storage program codes such as a mobile hard disk drive, a read-only memory (ROM), a random access memory (RAM), a magnetic disc, or a compact disc (CD).

Alternatively, if implemented in form of software functional units and sold or used as independent product, the above integrated unit of the disclosure may also be stored in a computer-readable storage medium. Based on such understanding, the technical solution of the embodiments of the disclosure substantially or in part making contributions to the related art may be embodied in a software product. The computer software product is stored in a storage medium, and includes several instructions to enable a computer device (which may be a personal computer, a server, a network device or the like) to perform all or some of the method according to various embodiments of the disclosure. The foregoing storage medium includes various media capable of storage program codes such as a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for communication, comprising:
receiving, by an application function (AF) or a network function (NF), first information from a network data analytics function, wherein the first information comprises first packet flow description (PFD) analysis information corresponding to a first application identifier and/or first PFD information corresponding to the first application identifier; and
sending, by the AF or the NF, second information to a first network element, wherein the second information is configured to request processing PFD information corresponding to the first application identifier, and the processing comprises at least one of creation, update and deletion.

2. The method of claim 1, wherein the second information comprises the PFD information to be processed and/or the first application identifier.

3. The method of claim 1, wherein receiving, by the AF or the NF, the first information from the network data analytics function comprises:
receiving, by the AF or the NF, the first information from the network data analytics function through the first network element; or
receiving, by the AF or the NF, the first information from the network data analytics function directly.

4. The method of claim 1, further comprising:
sending, by the AF or the NF, third information to the network data analytics function, wherein the third information is configured to subscribe PFD analysis information and/or PFD information, and the third information comprises the first application identifier.

5. The method of claim 4, wherein sending, by the AF or the NF, the third information to the network data analytics function comprises:
sending, by the AF or the NF, the third information to the network data analytics function through the first network element; or
sending, by the AF or the NF, the third information to the network data analytics function directly.

6. The method of claim 1, wherein the first PFD analysis information comprises the first PFD information.

7. The method of any one of claims 1 to 6, wherein the first network element comprises: a network exposure function and/or a packet flow description function.

8. A method for communication, comprising:
sending, by a network data analytics function, first information to an application function (AF) or a network function (NF), wherein the first information comprises first packet flow description (PFD) analysis information corresponding to a first application identifier and/or first PFD information corresponding to the first application identifier.

9. The method of claim 8, wherein sending, by the network data analytics function, the first information to the AF or the NF comprises:
sending, by the network data analytics function, the first information to the AF or the NF through a first network element; or
sending, by the network data analytics function, the first information to the AF or the NF directly.

10. The method of claim 8, further comprising:
receiving, by the network data analytics function, third information from the AF or the NF, wherein the third information is configured to subscribe PFD analysis information and/or PFD information, and the third information comprises the first application identifier.

11. The method of claim 10, wherein receiving, by the network data analytics function, the third information from the AF or the NF comprises:
receiving, by the network data analytics function, the third information from the AF or the NF through a first network element; or
receiving, by the network data analytics function, the third information from the AF or the NF directly.

12. The method of claim 8, wherein the first PFD analysis information comprises the first PFD information.

13. The method of claim 8, further comprising:
obtaining, by the network data analytics function, the first PFD analysis information corresponding to the first application identifier and/or the first PFD information corresponding to the first application identifier.

14. The method of any one of claims 8 to 13, further comprising:
obtaining, by the network data analytics function, first user plane information from a user plane function.

15. The method of any one of claims 8 to 13, further comprising:
obtaining, by the network data analytics function, second PFD information from a unified data repository function through a first network element; and/or
obtaining, by the network data analytics function, third PFD information and/or second user plane information from an analytics data repository function, wherein the third PFD information and/or the second user plane information is information within a first historical time range.

16. The method of claim 15, wherein the first network element comprises: a network exposure function and/or a packet flow description function.

17. A method for communication, comprising:
receiving, by a first network element, second information from an application function (AF) or a network function (NF), and sending third information to a unified data repository function, wherein the second information is configured to request processing packet flow description (PFD) information corresponding to a first application identifier, the third information is configured to request processing the PFD information corresponding to the first application identifier in the unified data repository function, and the processing comprises at least one of creation, update and deletion.

18. The method of claim 17, wherein the second information and the third information comprise the PFD information to be processed and/or the first application identifier.

19. The method of claim 17, further comprising:
receiving, by the first network element, first information from a network data analytics function, and sending the first information to the AF or the NF, wherein the first information comprises first PFD analysis information corresponding to the first application identifier and/or first PFD information corresponding to the first application identifier.

20. The method of claim 19, wherein the first PFD analysis information comprises the first PFD information.

21. The method of claim 17, further comprising:
receiving, by the first network element, third information from the AF or the NF, and sending the third information to a network data analytics function, wherein the third information is configured to subscribe PFD analysis information and/or PFD information, and the third information comprises the first application identifier.

22. The method of any one of claims 17 to 21, further comprising:
receiving, by the first network element, first subscription information from a network data analytics function, wherein the first subscription information is configured to subscribe PFD information corresponding to the first application identifier; and
querying, by the first network element, the unified data repository function to obtain second PFD information corresponding to the first application identifier, and sending the second PFD information to the network data analytics function.

23. The method of claim 17, wherein the first network element comprises: a network exposure function and/or a packet flow description function.

24. A method for communication, comprising:
receiving, by a first network element, fourth information from a network data analytics function, wherein the fourth information comprises second packet flow description, PFD, analysis information corresponding to a second application identifier and/or fourth PFD information corresponding to the second application identifier;
obtaining, by the first network element, fifth information from a unified data repository function, wherein the fifth information comprises fifth PFD information corresponding to the second application identifier; and
sending, by the first network element, sixth information to the unified data repository function, wherein the sixth information is configured to request processing PFD information corresponding to the second application identifier, and the processing comprises at least one of creation, update and deletion.

25. The method of claim 24, wherein the sixth information comprises the PFD information to be processed and/or the second application identifier.

26. The method of claim 24, wherein the second PFD analysis information comprises the fourth PFD information.

27. The method of claim 24, wherein the fifth PFD information comprises at least one piece of PFD information;
each piece of PFD information in the fifth PFD information comprises a first identifier indicating whether the **PFD** information is from the network data analytics function or an application function (AF).

28. The method of claim 27, wherein a priority of PFD information from the AF is higher than a priority of PFD information from the network data analytics function.

29. The method of claim 24, wherein sending, by the first network element, the sixth information to the unified data repository function comprises:
comparing, by the first network element, the fourth PFD information with the fifth PFD information, and sending the sixth information to the unified data repository function.

30. The method of claim 29, wherein comparing, by the first network element, the fourth PFD information with the fifth PFD information, and sending the sixth information to the unified data repository function comprises:
comparing, by the first network element, the fourth PFD information with the fifth PFD information;
sending the sixth information to the unified data repository function in a case that the fourth PFD information is not duplicated with the fifth PFD information, wherein the sixth information is configured to request creating PFD information corresponding to the second application identifier; and/or
sending the sixth information to the unified data repository function in a case that the fourth PFD information is duplicated with the fifth PFD information and the first identifier of PFD information duplicated with the fourth PFD information in the fifth PFD information indicates that the PFD information is from the network data analytics function, wherein the sixth information is configured to request updating and/or deleting PFD information corresponding to the second application identifier.

31. The method of claim 24, further comprising:
sending, by the first network element, seventh information to the network data analytics function, wherein the seventh information is configured to subscribe PFD analysis information and/or PFD information, and the seventh information comprises the second application identifier.

32. The method of claim 31, further comprising:
receiving, by the first network element, second subscription information from the network data analytics function, wherein the second subscription information is configured to subscribe PFD information corresponding to the second application identifier; and
querying, by the first network element, the unified data repository function to obtain sixth PFD information corresponding to the second application identifier, and sending the sixth PFD information to the network data analytics function.

33. The method of any one of claims 24 to 32, wherein the fourth PFD information comprises a PFD information overall set, and the PFD information overall set comprises all PFD information ever provided by the network data analytics function, and all the PFD information comprises PFD information to be processed; or
the fourth PFD information comprises a PFD information subset which consists of the PFD information to be processed.

34. The method of any one of claims 24 to 32, wherein the fourth PFD information comprises at least one piece of **PFD** information, each of at least a portion of the at least one piece of PFD information comprises a second identifier indicating whether the PFD information is valid or invalid.

35. The method of claim 24, wherein the first network element comprises: a network exposure function and/or a packet flow description function.

36. A method for communication, comprising:
sending, by a network data analytics function, fourth information to a first network element, wherein the fourth information comprises second packet flow description, PFD, analysis information corresponding to a second application identifier and/or fourth PFD information corresponding to the second application identifier, the fourth information is used for the first network element to determine or decide to request processing PFD information corresponding to the second application identifier, and the processing comprises at least one of creation, update and deletion.

37. The method of claim 36, wherein the second PFD analysis information comprises the fourth PFD information.

38. The method of claim 36, further comprising:
receiving, by the network data analytics function, seventh information from the first network element, wherein the seventh information is configured to subscribe PFD analysis information and/or PFD information, and the seventh information comprises the second application identifier.

39. The method of claim 36, further comprising:
obtaining, by the network data analytics function, the second PFD analysis information corresponding to the second application identifier and/or the fourth PFD information corresponding to the second application identifier.

40. The method of any one of claims 36 to 39, further comprising:
obtaining, by the network data analytics function, third user plane information from a user plane function.

41. The method of any one of claims 36 to 39, further comprising:
obtaining, by the network data analytics function, sixth PFD information from a unified data repository function through a first network element; and/or
obtaining, by the network data analytics function, seventh PFD information and/or fourth user plane information from an analytics data repository function, wherein the seventh PFD information and/or the seventh user plane information is information within a second historical time range.

42. The method of any one of claims 36 to 39, wherein the fourth PFD information comprises a PFD information overall set, and the PFD information overall set comprises all PFD information ever provided by the network data analytics function, and all the PFD information comprises PFD information to be processed; or
the fourth PFD information comprises a PFD information subset which consists of the PFD information to be processed.

43. The method of any one of claims 36 to 39, wherein the fourth PFD information comprises at least one piece of PFD information, at least a portion of the at least one piece of PFD information comprises a second identifier indicating whether the PFD information is valid or invalid.

44. The method of claim 36, wherein the first network element comprises: a network exposure function and/or a packet flow description function.

45. A method for communication, comprising:
sending, by a unified data repository function, fifth information to a first network element, wherein the fifth information comprises fifth PFD information corresponding to a second application identifier, the fifth information is used for the first network element to determine or decide whether to request processing PFD information corresponding to the second application identifier, and the processing comprises at least one of creation, update and deletion.

46. The method of claim 45, wherein the fifth PFD information comprises at least one piece of PFD information, and each piece of PFD information in the fifth PFD information comprises a first identifier indicating that the respective piece of PFD information is from a network data analytics function or an application function (AF).

47. The method of claim 46, wherein a priority of PFD information from the AF is higher than a priority of PFD information from the network data analytics function.

48. The method of claim 45, further comprising:
receiving, by the unified data repository function, sixth information from the first network element, wherein the sixth information is configured to request processing PFD information corresponding to the second application identifier, and the processing comprises at least one of creation, update and deletion.

49. The method of claim 48, wherein the sixth information comprises the PFD information to be processed and/or the second application identifier.

50. The method of claim 45, wherein the first network element comprises: a network exposure function and/or a packet flow description function.

51. An apparatus for communication, applied to an application function (AF) or a network function (NF), and comprising a first receiving unit and a first sending unit, wherein,
the first receiving unit is configured to receive first information from a network data analytics function, wherein the first information comprises first packet flow description (PFD) analysis information corresponding to a first application identifier and/or first PFD information corresponding to the first application identifier; and
the first sending unit is configured to send second information to a first network element, wherein the second information is configured to request processing PFD information corresponding to the first application identifier, and the processing comprises at least one of creation, update and deletion.

52. An apparatus for communication, applied to a network data analytics function, and comprises a second sending unit configured to send first information to an application function (AF) or a network function (NF), wherein the first information comprises first packet flow description (PFD) analysis information corresponding to a first application identifier and/or first PFD information corresponding to the first application identifier.

53. An apparatus for communication, applied to a first network element, and comprising a third receiving unit and a third sending unit, wherein,
the third receiving unit is configured to receive second information from an application function (AF) or a network function (NF), wherein the second information is configured to request processing PFD information corresponding to a first application identifier; and
the third sending unit is configured to send third information to a unified data repository function, wherein the third information is configured to request processing PFD information corresponding to the first application identifier in the unified data repository function, and the processing comprises at least one of creation, update and deletion.

54. An apparatus for communication, applied to a first network element, and comprising a fourth receiving unit and a fourth sending unit, wherein,
the fourth receiving unit is configured to receive fourth information from a network data analytics function, wherein the fourth information comprises second packet flow description (PFD) analysis information corresponding to a second application identifier and/or fourth PFD information corresponding to the second application identifier; and the fourth receiving unit is further configured to obtain fifth information from a unified data repository function, wherein the fifth information comprises fifth PFD information corresponding to the second application identifier; and
the fourth sending unit is configured to send sixth information to the unified data repository function, wherein the sixth information is configured to request processing PFD information corresponding to the second application identifier, and the processing comprises at least one of creation, update and deletion.

55. An apparatus for communication, applied to a network data analytics function, and comprising a fifth sending unit, wherein the fifth sending unit is configured to send fourth information to a first network element, the fourth information comprises second PFD analysis information corresponding to a second application identifier and/or fourth PFD information corresponding to the second application identifier, and the fourth information is used for determining or deciding to request processing PFD information corresponding to the second application identifier, and the processing comprises at least one of creation, update and deletion.

56. An apparatus for communication, applied to a unified data repository function, and comprising a sixth sending unit, wherein the sixth sending unit is configured to send fifth information to a first network element, wherein the fifth information comprises fifth PFD information corresponding to a second application identifier, the fifth information is used for determining or deciding whether to request processing PFD information corresponding to the second application identifier, and the processing comprises at least one of creation, update and deletion.

57. A computer-readable storage medium stored with a computer program, wherein the computer program, when executed by a processor, implements the steps of the method of any one of claims 1 to 7; or
the computer program, when executed by the processor, implements the steps of the method of any one of claims 8 to 16; or
the computer program, when executed by the processor, implements the steps of the method of any one of claims 17 to 23; or
the computer program, when executed by the processor, implements the steps of the method of any one of claims 24 to 35; or
the computer program, when executed by the processor, implements the steps of the method of any one of claims 36 to 44; or
the computer program, when executed by the processor, implements the steps of the method of any one of claims 45 to 50.

58. A communication device, comprising a memory, a processor, and a computer program that is stored in the memory and is capable of being run on the processor, wherein processor executes the computer program to implement the steps of the method of any one of claims 1 to 7; or
the processor executes the computer program to implement the steps of the method of any one of claims 8 to 16; or
the processor executes the computer program to implement the steps of the method of any one of claims 17 to 23; or
the processor executes the computer program to implement the steps of the method of any one of claims 24 to 35; or
the processor executes the computer program to implement the steps of the method of any one of claims 36 to 44; or
the processor executes the computer program to implement the steps of the method of any one of claims 45 to 50.
